# EUROPÄISCHE PATENTSCHRIFT

(11) **EP 0 760 130 B1**
(45) Veröffentlichungstag und Bekanntmachung des Hinweises auf die Patenterteilung: **15.04.1998**
(21) Anmeldenummer: 95916579.6
(22) Anmeldetag: 03.05.1995
(51) Int. Cl.: G06F 9/46

(54) **DATENVERWALTUNGSSYSTEM EINES REALZEITSYSTEMS**
DATA MANAGEMENT SYSTEM FOR A REAL-TIME SYSTEM
SYSTEME DE GESTION DE DONNEES D'UN SYSTEME EXPLOITE EN TEMPS REEL

(30) Priorität: 10.05.1994 DE 4416552
(43) Veröffentlichungstag der Anmeldung: 05.03.1997
(73) Patentinhaber: SIEMENS AKTIENGESELLSCHAFT, 80333 München (DE)
(72) Erfinder: KRUSCHE, Stefan, D-85221 Dachau (DE); LUKAS, Dirk, D-82166 Gräfelfing (DE); LANG, Stefan, D-81371 München (DE); LANTERMANN, Jürgen, D-81477 München (DE)
(86) Internationale Anmeldenummer: DE9500583
(87) Internationale Veröffentlichungsnummer: WO9530955

(56) Entgegenhaltungen:
- EP-A- 0 266 505
- COMPUTER AIDED DESIGN, OCT. 1990, UK, Bd. 22, Nr. 8, ISSN 0010-4485, Seiten 469-479, KIM W ET AL 'Object-oriented database support for CAD'
- SIGMOD RECORD, Juni 1992 NEW YORK, US, Seiten 124-133, C. MOHAN ET AL 'Efficient and flexible methods for transient versioning of records to avoid locking by read-only transactions'
- INTERNATIONAL CONFERENCE ON DISTRIBUTED COMPUTING SYSTEMS, ARLINGTON, TEXAS, MAY 20 - 24, 1991, Nr. CONF. 11, 20.Mai 1991 INSTITUTE OF ELECTRICAL AND ELECTRONICS ENGINEERS, Seiten 10-17, XP 000221838 CHEN R C ET AL 'IMPLEMENTING CONSISTENCY CONTROL MECHANISMS IN THE CLOUDS DISTRIBUTED OPERATING SYSTEM*'
- ACM TRANSACTIONS ON COMPUTER SYSTEMS, NOV. 1986, USA, Bd. 4, Nr. 4, ISSN 0734-2071, Seiten 338-378, CAREY M J ET AL 'The performance of multiversion concurrency control algorithms'

## Beschreibung

Konventionelle Datenverwaltungssysteme (siehe zum Beispiel Computer Aided Design, Oct. 1990, Bd. 22, Nr. 8, London, Seiten 469 bis 479) weisen sowohl ein Transaktions-Management-System gemäß Merkmal a) des Anspruchs 1 als auch ein Generationen-Management-System auf, das eine im Rahmen einer Transaktion erzeugte neue Datengeneration nach Beendigung der Transaktion verwaltet.

Datenverwaltungssysteme von Realzeitsystemen sollen ihren Anwendersystemen eine schnelle und sichere (konsistente) Online-Verwaltung verschiedener Datengenerationen bieten.

Der Erfindung liegt die Aufgabe zugrunde, ein Datenverwaltungssystem anzugeben, das die obengenannten Anforderungen erfüllt.

Diese Aufgabe wird durch ein Datenverwaltungssystem mit den Merkmalen nach Anspruch 1 gelost.

Durch die funktionale Kopplung der Transaktionssteuerung mit der Generationenverwaltung über eine gemeinsam verwendete Zugriffs-Datenstruktur zu den Datenobjekten des Datenverwaltungssystems wird die Verwaltung verschiedener Datengenerationen auf der Basis derselben Datenobjekte, wie sie auch von dem Transaktions-Management-System verwendet werden, durchgeführt. Dadurch wird eine schnelle und sichere Online-Verwaltung ermöglicht.

Eine Ausführungsform der Erfindung ist durch Anspruch 2 angegeben. Durch diese Ausführungsform werden die im Rahmen einer Transaktion erzeugten neuen Datenobjekte zu einer Datengeneration zusammengefaßt und sind somit anhand einer GEN_ID eindeutig nach ihrer Entstehungsreihenfolge identifizierbar. Dadurch ist es dem Generationen-Management-System bspw. möglich, eine nicht mehr benötigte Datengeneration gemeinsam, d.h. durch einen einzigen Löschauftrag, zu löschen.

Eine weitere Ausführungsform der Erfindung ist durch Anspruch 3 angegeben. Durch diese Ausführungsform wird die Durchführung von zu einer Transaktion parallelen Lesesequenzen ermöglicht.

Eine Ausführungsform der Erfindung ist durch Anspruch 4 angegeben. Durch diese Ausführungsform wird der Zugriff von zu einer Transaktion parallelen Transaktionen zu demselben Datenobjekt verhindert.

Eine weitere Ausführungsform der Erfindung ist durch Anspruch 5 angegeben. Durch die dynamische Zuordnung wird die Behandlung von Datenobjekten verschiedener Granularitat ermöglicht. Das heißt, daß eine TGSE sowohl einem Datenobjekt kleinster Granularitat (Datenelenment), als auch einem Datenobjekt größerer Granularitat (Datengruppe) zugeordnet werden kann. Die genannte dynamische Zuordnungsbarkeit wird dadurch erreicht, daß die TGSE entweder dynamisch bei Bedarf erzeugt werden, oder einem gemeinsamem Pool entnommen werden.

Eine weitere Ausführungsform der Erfindung ist durch Anspruch 6 angegeben. Durch diese Ausführungsform können die TGSE vom Transaktions-Management-System nach ihrer Entstehungsreihenfolge zu einem Generationenbaum verkettet werden, der vom Generationen-Management-System anschließend verwaltet wird. Diese Ausführungsform setzt die dynamische Zuordnung der TGSE voraus.

Im folgenden wird ein Ausführungsbeispiel der Erfindung anhand der Zeichnung näher erläutert.

In der Zeichnung repräsentieren die Pfeile zwischen den System-Blöcken eine funktionale Beziehung (z.B. einen Prozeduraufruf, wobei der Kopf eines Pfeils auf die aufgerufene Prozedur zeigt).

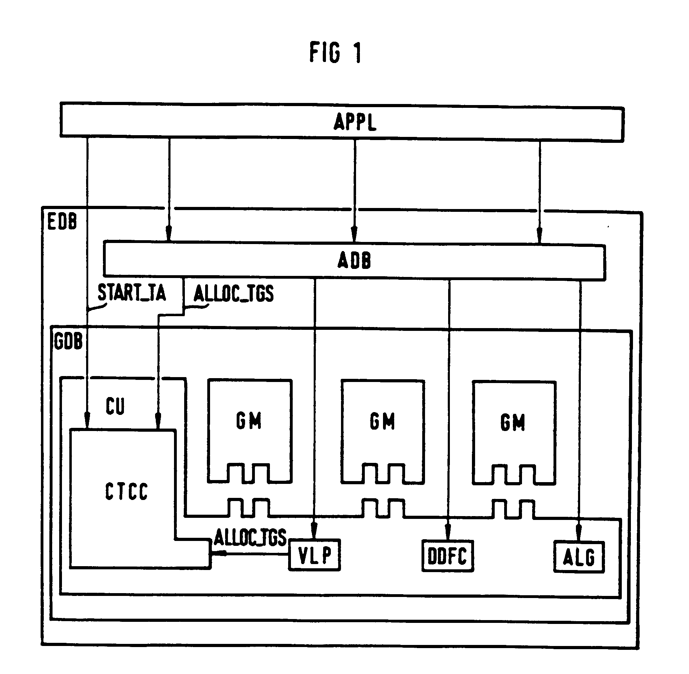

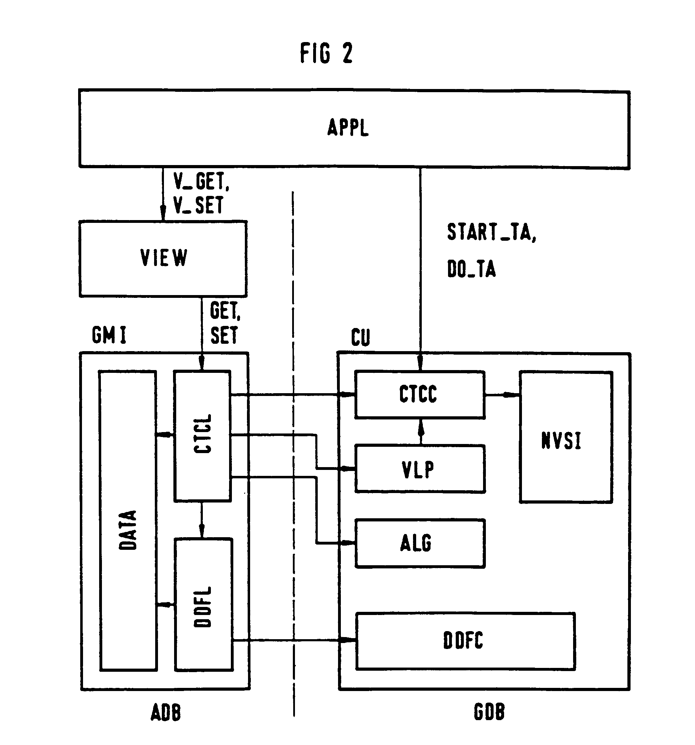

Fig. 1 und 2 zeigen die Struktur eines erfindungsgemäßen Datenverwaltungssystems EDB, auf das verschiedene Anwendungen APPL zugreifen können.

Das Datenverwaltungssystem besteht aus zwei Schichten, namlich einer anwendungsspezifischen Systemschicht, die im folgenden als applikationsspezifische Datenbasis ADB bezeichnet wird, und einer anwendungsunabhangigen Systemschicht, die im folgenden als generische Datenbasis GDB bezeichnet wird.

Die generische Datenbasis GDB umfaßt zentrale und lokale Funktionen, wobei die zentralen Funktionen in einem zentralem Steuerungssystem CU und die lokalen Funktionen in generischen Modulen GM realisiert sind.

Das zentrale Steuerungssystem CU enthält ein zentrales Zugriffssteuerungssystem CTCC, das Zugriffe (Einzelzugriffe oder Zugriffsequenzen) zentral steuert, allgemeine Zugriffsalgorithmen ALG, ein Sicherungssystem NVSI, das die Schnittstelle zu einem Hintergrundspeicher zur Sicherung der Anwenderdaten realisiert, einen Datenpool VLP zur Verwaltung von Daten mit variabler Lange und ein zentrales Verteilungssystem DDFC, das der Verteilung von aktualisierten Anwenderdaten auf die verschiedenen Prozessoren des Realzeitsystems dient.

Ein generisches Modul GM stellt ein Definitionsmodul zur Beschreibung eines Daten-Containers dar, der Datenstrukturen zum Speichern der Anwenderdaten sowie die dazu benötigten Zugriffsstrukturen, d.h. Adressierungsverfahren und elementare Zugriffsprozeduren, enthält. Darüberhinaus enthalten die generischen Module zusätzliche Strukturen zur Unterstützung des zentralen Funktionensystems, d.h. Strukturen zur Unterstützung der Koordination und Konsistenzsicherung (lokales Zugriffssteuerungssystems CTCL), sowie Strukturen zur Unterstützung der Verteilung der Anwenderdaten auf verschiedene Plattformen (lokales Datenverteilungssystem DDFL). Die Beschreibung der genannten Strukturen im generischen Modul erfolgt dabei in einer vom Anwender unabhängigen Weise, d.h. in einer vom Daten-Layout der Datenstrukturen unabhängigen Weise.

Unterschiedliche Typen von generischen Modulen werden durch Kombination von Bausteinen (z.B. lokales Zugriffssteuerungssystem CTCL, lokales Verteilungssystem DDFL sowie hierzu notwendige zusätzliche Datendefinitionen, verschiedene Adressierungsverfahren) erzeugt. Die Varianten werden durch die Anforderungen bestimmt, die sich aus der Datenmodellierung der entsprechenden Anwendung ergeben.

Jedes generische Modul enthält einen Satz von elementaren Zugriffsprozeduren, die die Steuerung eines Einzelzugriffs betreffen. Dieser Satz umfaßt eine Prozedur GET zum Lesen von Anwenderdaten, eine Prozedur SET zum Modifizieren von Anwenderdaten sowie Prozeduren CREATE und DELETE zum Erzeugen bzw. Löschen von Datenelementen des Anwenders. Ein Zugriff auf die Daten eines Anwenders ist nur über diese speziellen Zugriffsprozeduren möglich (Datenkapselung). Daten mit entsprechender Persistenzanforderung werden im Core-Image-Format auf einem Hintergrundspeicher gesichert. Dadurch wird gewährleistet, daß nach einem Wiederanlauf des Vermittlungsrechners mit zugehörigem Ladevorgang die aktuellen Daten schnellstmöglich zur Verfügung stehen.

Die applikationsspezifische Datenbasis ADB umfaßt Views und Modulinstanzen, wobei die Modulinstanzen durch Instantiierung aus den generischen Modulen erzeugt werden.

Durch die genannte Instantiierung werden die Daten-Container (generischen Module) mit bestimmten Daten-Deklarationen initialisiert, wodurch die Datenstrukturen und die Zugriffsalgorithmen auf diese Datenstrukturen in Beziehung zueinander gesetzt werden. Die Views bilden die Schnittstelle zu der aktuellen Anwendung APPL. Sie repräsentieren damit das logische Bild des konzeptionellen Datenmodells dieser Anwendung.

Das Zugriffssteuerungssystem steuert den Zugriff von Anwendern auf das Datenverwaltungssystem EDB und stellt dabei sicher, daß ein Aktualisierungsvorgang die Daten im Datenverwaltungssystem von einem konsistenten Ausgangszustand in einen konsistenten Endzustand überführt. Um diese Konsistenz sicherzustellen, behandelt das Zugriffssteuerungssystem Zugriffssequenzen (Transaktionen oder Lesesequenzen) in einer ganzheitlichen (atomaren) Weise, d.h. eine Transaktion wird bspw. entweder ganzheitlich durchgeführt oder ganzheitlich zurückgewiesen.

Darüberhinaus koordiniert das Zugriffssteuerungssystem den gleichzeitigen Zugriff von zueinander parallelen Zugriffssequenzen.

Das Zugriffssteuerungssystem umfaßt das CTCC, welches für den Anwender solche Steuerungsaufträge (z.B. START_TA, DO_TA, ABORT_TA) durchführt, die die Steuerung einer Zugriffssequenz in ihrer Gesamtheit betreffen.

Der zentrale Datenpool VLP verwaltet semipermanente und transiente Daten von variabler Länge. Er beinhaltet sowohl die Daten als auch einen Satz von Primitiven, um die von ihm beherbergten Daten abzuspeichern und zu manipulieren.

Alle vom zentralen Datenpool verwalteten Daten werden durch den Datenpool eingekapselt. Alle Zugriffe auf diese Daten können also nur über die genannten Primitiven erfolgen. Die genannten Modulinstanzen können vom Datenpool einen Block beliebiger Länge reservieren lassen, wobei jeder reservierte Datenblock durch einen bei seiner Reservierung zugeordneten logischen Schlüssel identifiziert wird.

Die generischen Zugriffsalgorithmen ALG umfassen Funktionen, die allen generischen Modulen gemeinsam sind, nämlich zum einen Algorithmen zur logischen Organisation der Datenhaltung (z.B. linked list, binary tree), zum anderen Mechanismen zur physikalischen Speicherung der Daten, d.h. datenstrukturunabhangige Wege durch datenbasisinterne Verwaltungs- bzw. Zugriffsstrukturen. Die generischen Zugriffsalgorithmen werden ausschließlich von den generischen Modulen aufgerufen.

Das DDFC steuert den Transfer von Anwenderdaten von einer Plattform (Prozessor) zu anderen Plattformen (Prozessoren) und gewährleistet dabei die Datenkonsistenz zwischen verschiedenen Plattformen (Prozessoren). Das DDFC wird von einem DDFL eines Anwendermoduls dynamisch aufgerufen.

Ein generisches Modul dient, wie bereits erwähnt, als ein Daten-Container, der Datenstrukturen sowie für diese Datenstrukturen spezifische Zugriffsalgorithmen in einer anwendungsunabhangigen Weise beschreibt, d.h. in einer vom Daten-Layout unabhängigen Art und Weise. Ein generisches Modul umfaßt einen Satz von Zugriffsprozeduren zum Datenverwaltungssystem, die es der jeweiligen Anwendung zur Verfügung stellt, um dadurch einen lesenden oder schreibenden Zugriff zu den in der generischen Datenbasis GDB enthaltenen Daten zu realisieren.

Aufgrund der internen Architektur eines generischen Moduls, die zwischen Datenstruktur-spezifischen Teilen und allgemeinen Teilen des Datenzugriffs und der Datenbehandlung unterscheidet, können allgemeine Funktionen als generische Algorithmen ALG deklariert werden, die von jedem generischen Modul benutzt werden können, da sie in dem Zentralmodul CM der generischen Datenbasis enthalten sind. Darüberhinaus benützen die generischen Module andere allgemeine Funktionen, die vom zentralen Zugriffssteuerungssystem CTCC und dem Datenpool VLP zur Verfügung gestellt werden.

Ein Hauptzweck, der mit der Einführung von generischen Modulen verfolgt wird ist die Wiederverwendbarkeit und Wiederersetzbarkeit von Software. Die generischen Module bilden eine Bibliothek (Library), aus der anwendungsspezifische Objektklassen durch Instantiierung erzeugt werden können, d.h. durch das Ersetzen von allgemeinen Datenlayout-Informationen (Platzhaltern, in CHILL z.B. ANY_ASSIGN) durch spezifische Layout-Informationen. Die Anwendung kann geeignete generische Module auswählen, diese instantiieren und die instantiierten Module zu einem View bzw. mehreren Views kombinieren.

Durch die Einfügung der Anwendungsprozedurschicht VIEW zwischen Anwendung und Anwendermodul erreicht man die Unabhängigkeit der jeweiligen Anwendung von den logischen Datenstrukturen. Mit Hilfe einer Anwendungsprozedur werden Zugriffe auf eine oder mehrere Anwendermodule durchgeführt, wobei ein Anwendermodul jeweils eine Objektklasse verwaltet. Eine Anwendungsprozedur enthält als Parameter die gewünschten Attribute des jeweiligen Datenobjekts, wobei es sich bei diesen Parametern um Rückgabeparameter handelt, die der Applikation nach Ausführung der Anwenderprozedur zurückgegeben werden. Durch die Anwendungsprozedur wird der Anwendung somit eine eigene Sichtweite auf die gespeicherten Anwendungsdaten bereitgestellt. Änderungen der logischen Datenstrukturen haben somit keine Auswirkungen auf die Anwendungen.

Eine Anwendung bzw. ein Anwender verwendet zur Verwaltung seiner Anwenderdaten ausschließlich die Anwendungsprozeduren VIEW. Für die konsistente Änderung abhängiger Daten wird eine entsprechende Folge von Anwenderprozeduraufrufen durch Befehle an das zentrale Zugriffssteuerungssystem als Transaktion gekennzeichnet. Die Durchführung der Transaktion sowie die Sicherung der Daten auf dem Hintergrundspeicher und die Verteilung der Daten erfolgt in eigenständiger Weise durch das Datenverwaltungssystem und ist somit vollständig unsichtbar für den Anwender.

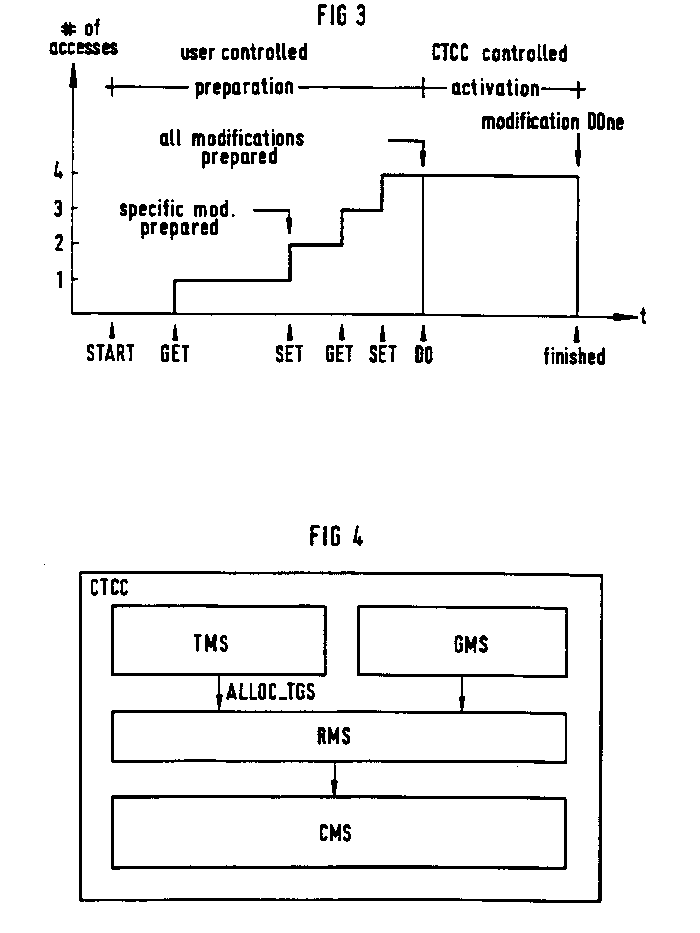

Fig. 3 zeigt die Vorbereitungsphase und die Aktivierungsphase einer Transaktion.

In der vom Anwender gesteuerten Vorbereitungsphase wird die Transaktion Schritt für Schritt aufgebaut, indem vom Anwender nacheinander die Zugriffsprozeduren (SET, GET, usw.) für Einzelzugriffe aufgerufen werden. Innerhalb einer Transaktion können grundsätzlich beliebig viele Einzelzugriffe durch Aufruf der entsprechenden Zugriffsprozeduren initiiert werden.

Die Vorbereitungsphase wird durch die Prozedur START_TA gestartet und durch die Prozedur DO_TA beendet. Die Prozedur START_TA ordnet der Transaktion eine Transaktionskennung TA_ID zu und übergibt sie dem Anwender. Der Anwender verwendet diese TA_ID dann als Eingangsparameter beim Aufruf der Zugriffsprozeduren für Einzelzugriffe.

In der Vorbereitungsphase werden die Aufrufe der Zugriffsprozeduren aufgezeichnet und eventuelle Änderungen der vom Zugriff betroffenen Daten vorbereitet. In der Vorbereitungsphase hat der Anwender die Möglichkeit, die Transaktion durch den Aufruf der Prozedur ABORT_TA zu verwerfen.

Durch den Aufruf der Prozedur DO_TA wird gleichzeitig die Aktivierungsphase gestartet, die ausschließlich vom zentralen Zugriffssteuerungssystem gesteuert wird und deshalb unabhängig von Anwenderaufrufen abläuft. In der Aktivierungsphase können somit keine weiteren Aufrufe für Einzelzugriffe berücksichtigt werden.

In der Vorbereitungsphase wird die Koordination einer Transaktion durchgeführt, d.h. alle Kollisionsfälle mit anderen parallelen Transaktionen werden identifiziert und koordiniert. Die Koordinierung erfolgt dabei derart, daß solche Transaktionen, die früher gestartet wurden, fortgeführt werden dürfen, wogegen andere parallele Transaktionen zurückgewiesen werden, indem eine entsprechende negative Rückmeldung an den Anwender zurückgegeben wird. Da alle Kollisionsfälle somit in der Vorbereitungsphase gelöst werden, können Transaktionen in der Aktivierungsphase unabhängig voneinander durchgeführt werden.

Fig. 4 zeigt die Struktur des zentralen Zugriffssteuerungssystems CTCC. Das zentrale Zugriffssteuerungssystem CTCC umfaßt ein Transaktions-Management-System TMS, ein Generationen-Management-System GMS, ein Resourcen-Management-System RMS und ein Kollisions-Management-System CMS.

Das Transaktions-Management-System TMS steuert den transaktionsorientierten Zugriff auf die Datenobjekte OCI des Datenverwaltungssystems.

Das Generationen-Management-System GMS verwaltet die im Rahmen von Transaktionen erzeugten Datengenerationen anhand einer vom Transaktions-Management-System während der Aktivierungsphase einer Transaktion vergebenen Generationenkennung GEN_ID. Diese Verwaltung umfaßt das Aktualisieren einer neu erzeugten Datengeneration, d.h. das Transferieren der neuen Datengeneration auf ihre endgültigen Speicherplätze im Arbeitsspeicher und/oder auf der Disk. Darüber hinaus umfaßt die genannte Verwaltung die Steuerung von Lesesequenzen (Folgen von logisch zusammengehörigen Lesezugriffen auf die Datenobjekte des Datenverwaltungssystems).

Durch diese Art der Verwaltung wird es ermöglicht, daß eine Gruppe von Datenobjekten ein und derselben Generation im Rahmen einer Lesesequenz gelesen werden kann, während parallel dazu eine Transaktion stattfindet.

Das Resourcen-Management-System RMS verwaltet die Zugriffs-Datenstrukturen, die beim Zugriff des Transaktions-Management-Systems und/oder des Generationen-Management-Systems verwendet werden.

Das Kollisions-Management-System CMS koordiniert schreibende Zugriffe auf ein und dasselbe Datenobjekt, die durch parallele Transaktionen ausgelöst werden und verhindert, daß die älteste Datengeneration gelöscht wird, während gleichzeitig eine Lesesequenz einen lesenden Zugriff auf Datenobjekte dieser Datengeneration durchführen will.

Das RMS umfaßt als größte Datenstruktur einen Weichenpool TGS_POOL, der sowohl vom Transaktions-Management-System TMS, als auch vom Generationen-Management-System verwendet wird. Der Weichenpool dient dazu, vom Transaktions-Management-System TMS im Rahmen einer Transaktion entgegengenommene neue Daten (transaktionsorientierte Eingaben) aufrechtzuerhalten (zwischenzuspeichern), bis sie an ihren endgültigen Speicherplätzen im Speicher und auf der Disk durch das Generationen-Management-System abgelegt worden sind.

Das RMS umfaßt des weiteren ein Logbuch TG_LOG, das eine geeignete Verwaltung der Transaktionen ermöglicht, eine Bereichstabelle SCOPE_TAB, die zur Verwaltung der verschiedenen Datengenerationen dient, und als kleinste administrierbare Datenstruktur die bereits genannte Weichenstruktur TGSE.

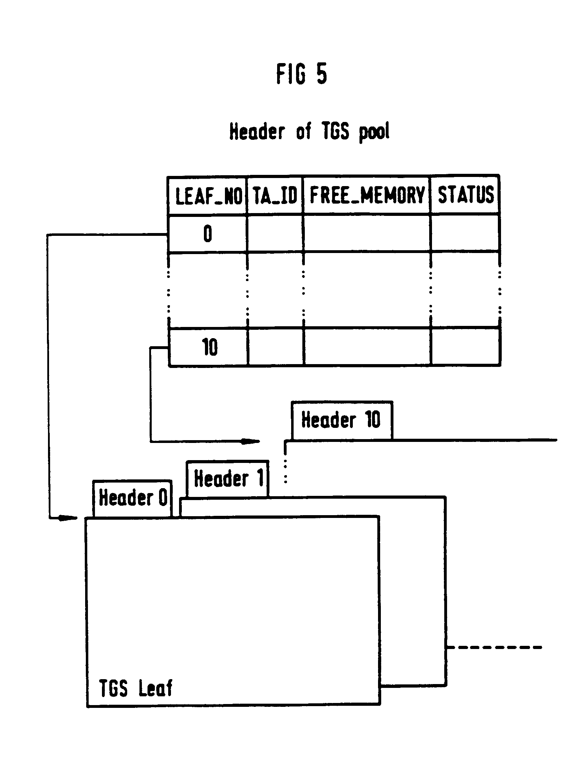

Fig. 5 zeigt die Architektur des Weichenpools TGS_POOL.

Die Architektur des Weichenpools umfaßt 10 Transaktionsblatter TL mit entsprechenden Headern 0 bis 10. Daraus ergibt sich, daß das Transaktions-Management-System 10 Transaktionen in paralleler Weise unterstützt, da jedes Transaktionsblatt TL ausschließlich für eine bestimmte Transaktion reserviert wird, indem eine zugeordnete Transaktionskennung TA_ID in das entsprechende Datenfeld des zugehörigen Headers eingetragen wird. Ein zusätzliches elftes Transaktionsblatt ist vorgesehen, um es einer aktiven Transaktion zu ermöglichen in ihrer Ausführung sogar dann fortzufahren, wenn ihr zugehöriges Transaktionsblatt mangels ausreichend verfügbarem Speicher (angezeigt durch ein Datenfeld FREE_MEMORY innerhalb des Headers) kurz läuft.

Damit ein Transaktionsblatt vom Resourcen-Management-System zur Verfügung gestellt werden kann, müssen drei Bedingungen erfüllt sein. Als erste Bedingung muß der freie Speicherplatz des Heaps, der in einem Datenfeld FREE_MEMORY des Headers angezeigt wird, über einer bestimmten Schwelle liegen. Als zweite Bedingung, darf ein Datenfeld TA_ID des Headers keinen Eintrag aufweisen. Als dritte Bedingung muß ein Datenfeld STATE des Headers, das den Zustand einer Transaktion anzeigt, den Zustand "frei" anzeigen.

Der Dateninhalt des Datenfeldes STATE ist ein transienter Parameter innerhalb des semipermanenten Transaktionsblattes, der notwendig ist, um ein Transaktionsblatt während einer Aufdatierungsphase weiterhin zu reservieren, obwohl die semipermanten Parameter FREE_MEMORY und TA_ID bereits die Wiederverwendbarkeit des Transaktionsblattes für andere Transaktionen anzeigen.

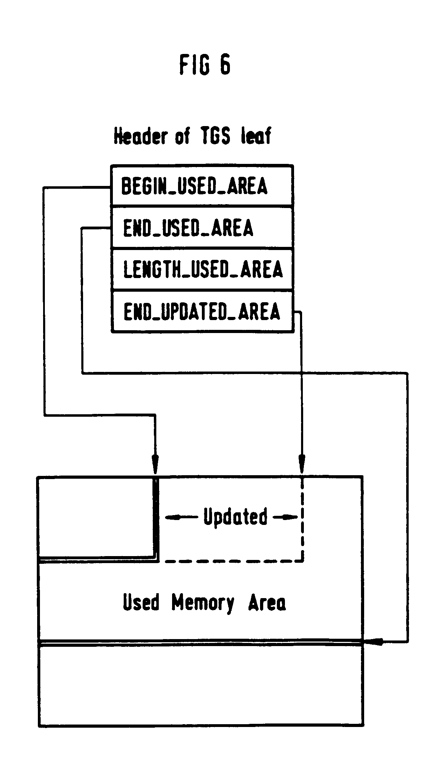

Fig. 6 zeigt die Architektur eines Transaktionsblattes, insbesondere die im Header des Transaktionsblattes TGL enthaltenen Datenfelder.

Ein Datenfeld BEGIN_USED_AREA zeigt den Beginn des Speicherbereichs an, der vom Transaktionsblatt TGL zur Speicherung der Input-Daten einer Transaktion beansprucht wird. Ein Datenfeld END_USED_AREA zeigt das Ende des genannten Speicherbereichs an. Das Datenfeld END_USED_AREA zeigt gleichzeitig den Beginn des Speicherbereichs an, der von einem weiteren TGL beansprucht werden kann.

Ein Datenfeld LENGTH_USED_AREA beinhaltet einen redundanten Parameter für Überwachungszwecke, der die Differenz des Speichers zwischen dem Inhalt des Datenfelds BEGIN_USED_AREA und des Datenfelds END_USED_AREA anzeigt.

Ein Datenfeld END_UPDATED_AREA zeigt schließlich das momentane Ende des von der Transaktion bereits auf die Disk übertragenen Speicherbereichs an.

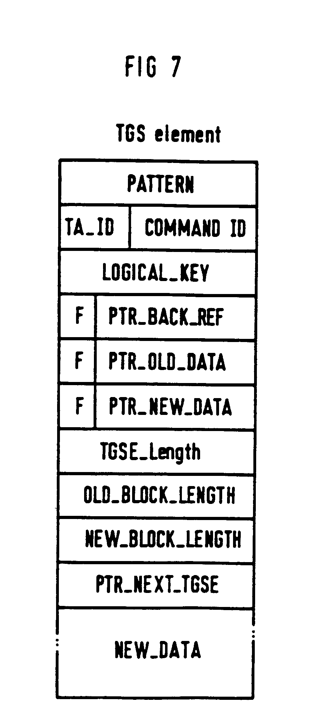

Fig. 7 zeigt den Aufbau einer Weichenstruktur TGSE, die die kleinste innerhalb des Weichenpools verwaltete Datenstruktur darstellt, und die durch eine Primitive des Transaktions-Management-Systems oder des Generationen-Management-Systems einer Transaktion zugeordnet wird und in ein Transaktionsblatt TGL als eine Overlay-Struktur gesetzt wird.

Ein Datenfeld PATTERN stellt einen Parameter für Überwachungszwecke dar, der anzeigt, daß die Weichenstruktur mit einem kompletten Speicherblock verknüpft ist, der der Transaktion durch den Datenpool VLP zugeordnet worden ist.

Eine Transaktionskennung TA_ID, die diejenige Transaktion bezeichnet, die die Weichenstruktur angefordert (zugeordnet) hat, und die die an der Weichenstruktur aufgehängte Datenstruktur, z.B. ein Datenobjekt, exklusiv für die zugehörige Transaktion reserviert.

Eine Komandokennung COM_ID und ein logischer Schlüssel LOG_KEY repräsentieren Protokollinformationen pro Datenobjekt, die zur Kommunikation mit den generischen Modulen dienen.

Eine Rückwärtsreferenz PTR_BACK_REF, die einen Zeiger zu einem Eintrag in einer Übersetzereinrichtung für den logischen Schlüssel, oder im Falle eines Generationenbaums einen Zeiger zur vorherigen Weichenstruktur repräsentiert. Ein Flag F unterscheidet die beiden genannten Fälle.

Einen Zeiger PTR_OLD_DATA, der einen Zeiger zu dem alten Bild eines Datenobjekts, oder im Fall eines Generationenbaumes einen Zeiger zur nächsten Weichenstruktur darstellt. Die beiden genannten Fälle werden wiederum durch ein Flag F unterschieden.

Einen Zeiger PTR_NEW_DATA, der einen Zeiger zu einem.neuen Bild eines Datenobjekts repräsentiert, wobei ein Flag F anzeigt, ob die Daten des neuen Abbilds auf andere Blattformen niedergeladen werden sollen.

Ein Datenfeld TGSE_L, das die physikalische Länge der in einem Datenfeld NEW_DATA gespeicherten Daten repräsentiert.

Ein Datenfeld OLD_BLK_L, das die physikalische Länge des vom Datenpool VLP zugeordneten alten Speicherblocks repräsentiert.

Ein Datenfeld NEW_BLK_L, das die physikalische Länge des durch den Datenpool VLP zugeordneten neuen Speicherblocks repräsentiert.

Ein Zeiger PTR_NEXT_TGSE, der einen in derselben Transaktion zugeordneten Zeiger zu der nächsten Weichenstruktur repräsentiert.

Ein Datenfeld NEW_DATA, das einen Datencontainer zur Aufnahme der neuen Daten repräsentiert.

Mit der Beschreibung der Weichenstruktur TGSE anhand von Fig. 7 ist die Beschreibung des semipermanenten Weichenpools TGS_POOL abgeschlossen und es wird nunmehr mit der Beschreibung einer weiteren Datenstruktur des RMS, dem sog. Logbuch TG_LOG fortgefahren.

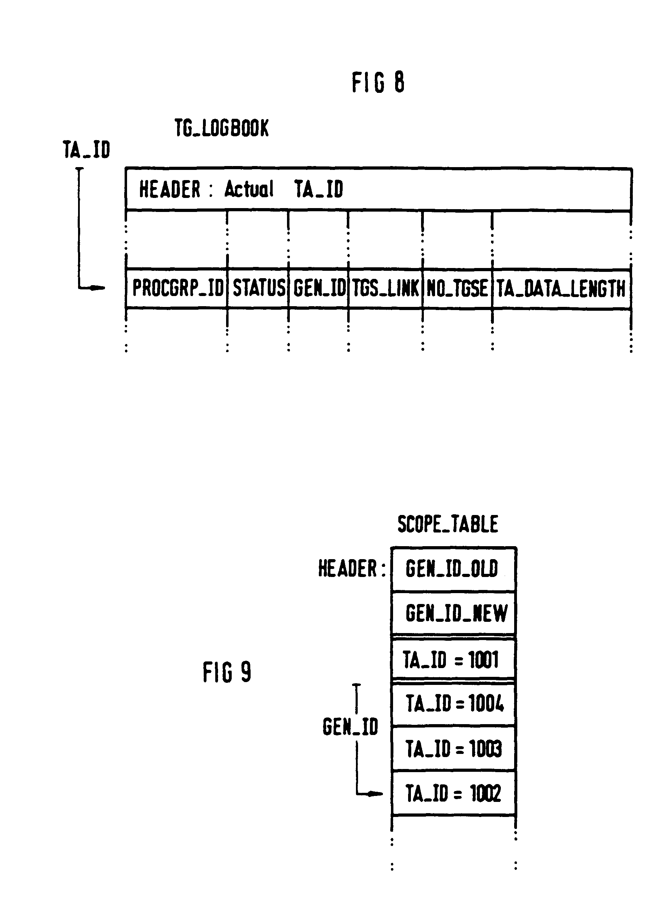

Fig. 8 zeigt die Struktur des Logbuchs TG_LOG zur Verwaltung von Transaktionen. Das semipermanente Logbuch repräsentiert eine Tabelle, in der für jede vorhandene Transaktionskennung TA_ID des Weichenpools jeweils eine Zeile reserviert ist.

Das semipermanente Logbuch repräsentiert eine Tabelle zur Verwaltung von Transaktionen, die in ihrem Header eine aktuelle Transaktionskennung TA_ID_ACT beinhaltet. Der Wert dieser aktuellen Transaktionskennung wird jeder neugestarteten Transaktion zugeordnet und daraufhin inkrementiert. Die aktuelle Transaktionskennung im Header ist als zyklischer Zähler implementiert.

Im folgenden werden die Felder einer beispielhaften Zeile des Logbuchs näher erläutert.

Ein Datenfeld PROCGRP₋ID, das Informationen über die Prozeßgruppe, die die Transaktion gestartet hat, beinhaltet.

Ein Zustandsfeld STATUS beinhaltet Informationen über den Zustand (Phase), in der sich eine Transaktion befindet. Eine Transaktion ist im wesentlichen in drei Phasen unterteilt, nämlich eine Vorbereitungs- und Aktivierungsphase, die beide unter der Kontrolle des Transaktions-Management-Systems stehen und einer Generationenphase, die unter der Kontrolle des Generationen-Management-Systems steht, und in der die neuen Daten an ihre endgültigen Speicherplätze im Speicher und auf der Platte transportiert werden. Die einzelnen Schritte der genannten verschiedenen Phasen werden als Zustandsinformationen im Zustandsfeld aufgezeichnet. Diese Aufzeichnung ermöglicht dem Konsistenz-Management-System, in geeigneter Weise auf Ereignisse, die einen Wiederanlauf des Realzeitsystems auslösen, zu reagieren.

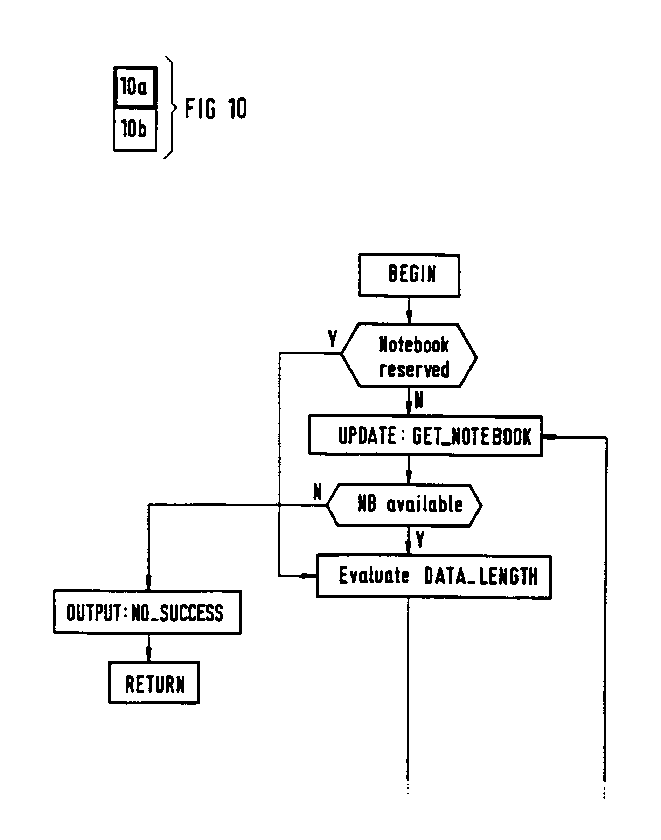

Fig. 9 zeigt die Struktur der Bereichstabelle SCOPE_TAB, deren Zweck im folgenden näher erläutert wird.

Der Beginn einer Transaktion wird in eindeutiger Weise durch die Vergabe einer Transaktionskennung TA₋ID markiert. Der Erzeugung einer neuen Datengeneration innerhalb der Aktivierungsphase einer Transaktion erfordert darüber hinaus die Vergabe einer Generationenkennung, die ebenfalls in eindeutiger Weise identifizierbar ist. Da alle in der Generationen-phase der Transaktion ausgeführten Aktionen anhand der Generationenkennung durchgeführt werden, muß eine semipermanente Datenstruktur, nämlich die genannte Bereichstabelle SCOPE_TAB vorhanden sein, um die Generationenkennung mit der Transaktionskennung verknüpfen zu können und dadurch auf die in einer Transaktion neu eingeführten Daten zugreifen zu können.

Ein weiterer Zweck der Bereichstabelle ist es, den gesamten Bereich von Datengenerationen aufzuzeichnen, der von dem Generationen-Management-System verwaltet wird. Das Transaktions-Management-System benützt die Bereichstabelle, um einer Transaktion eine Generationenkennung zuzuordnen. Aus diesem Grund enthält die Bereichstabelle außerdem einen Pool von Generationenkennungen.

Der gesamte Bereich von Generationen, die in der Bereichstabelle aufgezeichnet werden, wird durch einen Parameter GEN₋ ID_OLD beschrieben, der auf das Ende der Bereichstabelle zeigt und einen Parameter GEN₋ID-NEW, der einen Zeiger auf den Beginn der Bereichstabelle beinhaltet. Der Parameter GEN₋ ID₋NEW beinhaltet des weiteren einen Zeiger auf den Pool der Generationenkennungen, welcher als zyklischer Zähler implementiert ist.

Im folgenden werden die im RMS enthaltenen Resourcenprimitiven, die eine Shell um die Zugriffs-Datenstrukturen des Zugriffssteuerungssystems CTCC bilden und diese Datenstrukturen für alle anderen funktionalen Blöcke des Zugriffssteuerungssystems transparent machen, näher erläutert. Die Verwendung dieser Prozeduren wird durch Flußdiagramme in den folgenden Figuren näher erläutert.

Eine Prozedur APPOINT₋TAID wertet den Transaktionskennungen-Pool aus, ordnet der angeforderten Transaktion die aktuelle Transaktionskennung zu und erhöht anschließend den Wert der aktuellen Transaktionskennung.

Eine Prozedur ALLOC_TGL wertet den semipermanenten Header des weichen Pools TGS_P aus, ordnet der Transaktion ein Transaktionsblatt zu oder stellt einen Mangel an Resourcen fest und löst daraufhin ein Transaktions-Post-Processing mit hoher Priorität aus.

Eine Prozedur ENTER_TG_LOGBOOk transferiert Transaktionsinformationen, z.B. Informationen über den Status einer Transaktion, in das Logbuch TG_LOG.

Eine Prozedur VERIFY_TAID verifiziert die Transaktionskennung TA_ID, die vom Anwender der Prozedur DO_TA, die später näher erläutert wird, dem Steuerungssystem als Parameter übergeben worden ist, um festzustellen, ob diese Transaktionskennung im Logbuch immer noch aufgezeichnet ist.

Eine Prozedur DETMINE_TA_STATE bestimmt den Zustand einer Transaktion anhand des entsprechenden Eintrags im Logbuch.

Eine Prozedur APPOINT_GENID wertet den Generationenkennungs-Pool aus, ordnet eine aktuelle Generationenkennung zu und inkrementiert den momentanen Wert der aktuellen Generationskennung.

Eine Prozedur ALLOC_TGSE repräsentiert eine Dienstprozedur des CTCC für die ADB. Sie ermöglicht es einer Modulinstanz der applikationsspezifischen Datenbasis ADB, einer Transaktion eine semipermanente Weichenstruktur TGSE für transaktionsgesteuerte Eingaben zuzuweisen. Die Prozedur ALLOC_TGSE umfaßt dabei folgende Aktivitäten:
- Die Überprüfung des von der Modulinstanz übergebenen Satzes von Eingabeparametern
- Die Überprüfung von verfügbaren Zugriffs-Datenstrukturen, sowie das Aufrufen eines hoch priorisierten Transaktions-Post-Processings, falls keine ausreichende Speicherkapazität verfügbar ist
- Das Kopieren der neuen Daten in die zugewiesene Reichenstruktur und das Einfügen der Weichenstruktur in die zugehörige Weichenstruktur-Kette
- Das Aufrufen einer später zu erläuternden Prozedur TA_ CONTRL des Kollisions-Management-Systems und im Falle keines Konfliktes das Einfügen der genannten Weichenstruktur in den Datenzugriffspart des betreffenden Datenobjekts.

Eine Prozedur CONFIRM_TADATA durchschreitet die Weichenstruktur-Kette und informiert den Datenpool VLP im Falle eines verbundenen Speicherblocks des Datenpools mit Hilfe der Prozedur CONFIRM_SE IZE.

Eine Prozedur DETMINE_TGSLNK wertet das Logbuch TG_LOG aus und bestimmt daraus den weichen Zeiger TGS_LINK.

Eine Prozedur DETMINE_TGSEINFO wertet eine Weichenstruktur TGSE aus und bestimmt daraus bestimmte Informationen, z.B. die Transaktionskennung TA_ID, oder die Art der Verknüpfung der Weichenstruktur aus dem Datenfeld PATTERN.

Eine Prozedur DETMINE_OLDTAID wertet das Logbuch aus und bestimmt daraus die kleinste darin aufgezeichnete Transaktionskennung TA_ID.

Eine Prozedur ENTER_TGSHEADER überträgt Statusinformationen einer Transaktion, z.B. die Information Disk-Fehler in das entsprechende Status-Feld des Headers des Weichenpools TGS_P.

Eine Prozedur TA_ROLLBCKMEM ermöglicht ein Rückgängigmachen (Roll backward) von transaktionsgesteuerten Eingaben. Diese Prozedur führt folgende Aktionen durch:
- Sie durchschreitet die Weichenstruktur-Kette einer Transaktion
- Sie veranlaßt den Datenpool VLP im Falle von in der Weichenstruktur-Kette eingebundenen Speicherblöcken, diese Speicherblöcke freizugeben,
- Sie informiert den Funktionskomplex Plattform New der die Transaktion anfordernden Modulinstanz, falls die Kommandokennung dem Kommando-Create entsprach,
- Sie löst die entsprechende Weichenstruktur aus dem Datenzugriffspfad heraus,
- Sie setzt die Einträge im Header des Transaktionsblattes TGL und des Weichenpools TGS_P zurück.

Die Prozedur TA_ROLLBCKMEM wird auch im Falle eines Diskfehlers benützt.

Eine Prozedur TA_ROLLFORWARD ermöglicht ein Fortsetzen (roll forward) von transaktionsgesteuerten Eingaben im Falle von Recovery-Ereignissen und beinhaltet hierzu Teile der später erläuterten Prozedur DO_TA. Der Einstiegspunkt in diese beinhaltete Prozedur hängt vom Transaktionsstatus ab, der beim Eintritt des Recovery-Ereignisses vorlag.

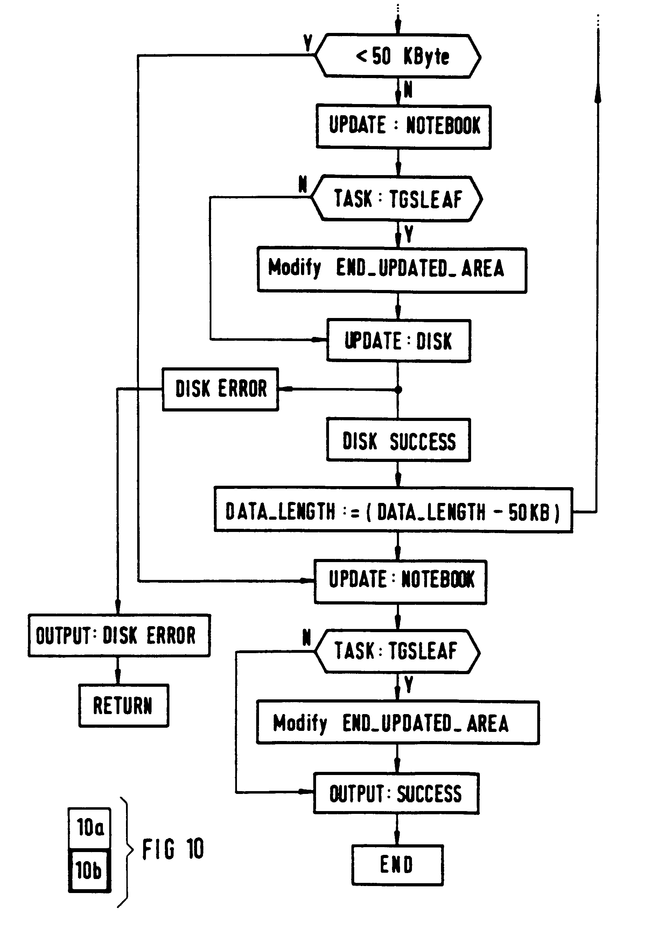

Im folgenden werden komplexere Primitiven des Resourcen-Management-Systems RMS anhand der Fig. 10 bis 12 erläutert.

Fig. 10 zeigt ein Flußdiagramm der Prozedur DO_TADATA.

Die Prozedur DO_TADATA veranlaßt, daß dem Zugriffssteuerungssystem übergebene Transaktionsdaten an die Aufdatierungsinstanz UPDATE weitergegeben werden, und zwar sowohl zur Abspeicherung in das Notizbuch NOTEBOOK, als auch auf die Platte DISK. Ein Eingangsparameter TASK mit den zwei möglichen Werten "TGSLEAF" oder "VLP" bestimmt dabei, ob die Prozedur mit den Transaktionsdaten, die durch den Eintrag im Header des Transaktionsblattes festgelegt sind arbeitet, oder mit denjenigen Transaktionsdaten, die in einem entsprechenden Speicherblock im Datenpool VLP abgespeichert sind, arbeitet. Mögliche Ausgangsparameter OUTPUT der genannten Prozedur sind "Disk-Error", "NO_SUCCESS" und "SUCCESS".

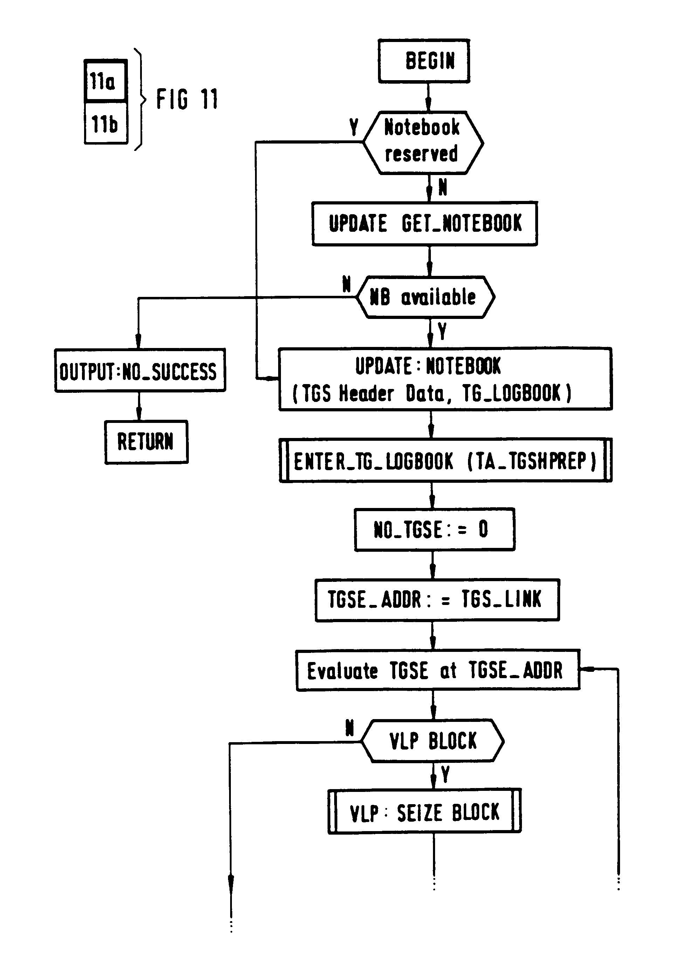

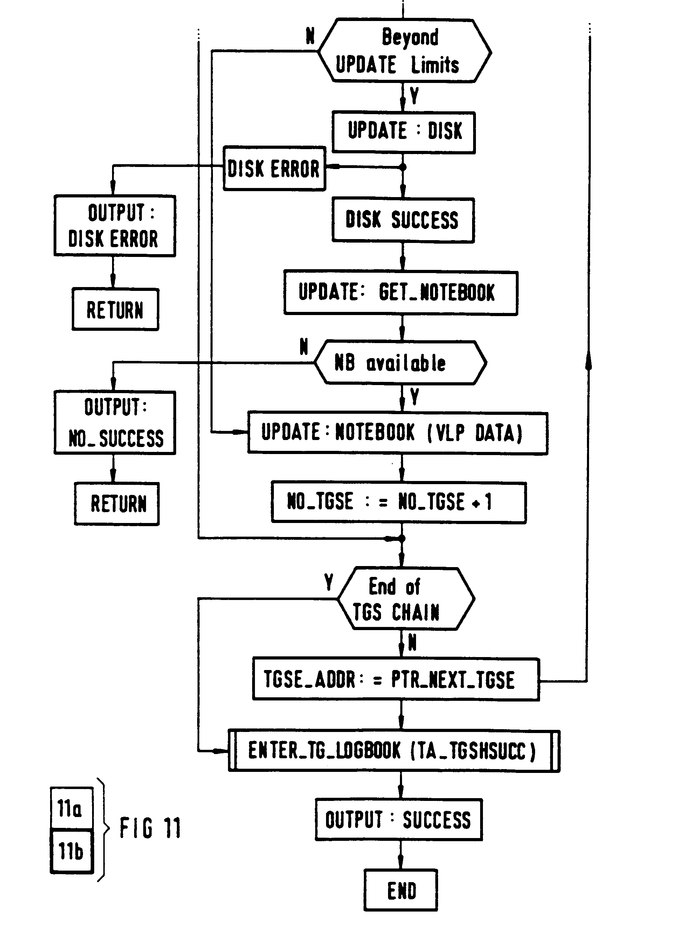

Fig. 11 stellt das Flußdiagranm einer Prozedur DO_HEADER dar. Diese Prozedur übergibt die Einträge im Header des Weichenpools, des Transaktionsblattes und des Logbuchs einer Transaktion an die Aufdatierungsinstanz mit dem Auftrag zur Abspeicherung im Notizbuch. Sodann durchläuft die Prozedur die Weichenkette und übergibt die sämtliche Bindungsinformationen enthaltenden Header der Speicherblöcke des Datenpools ebenfalls an die Aufdatierungsinstanz zur Abspeicherung im Notizbuch. Aus Konsistenzgründen muß diese Prozedur ebenfalls sicherstellen, daß Header-Informationen, die Daten bezüglich Zugriffs-Datenstrukturen betreffen, in dasselbe Notizbuch eingegeben werden. Falls nötig, muß diese Prozedur außerdem die Aufdatierungsinstanz mit dem Auftrag zur Abspeicherung auf der Platte DISK aufrufen. Diese Prozedur beinhaltet keine Eingangsparameter, während ihre Ausgangsparameter identisch mit den Ausgangsparametern der Prozedur DO_TADATA sind. Die Prozedur änder darüber hinaus zweimal den Status-Eintrag der Transaktion im Logbuch, und zwar wird beim ersten Mal die Status-Information TA_CLOSED in die Status-Information TA_ TGSHPREP umgewandelt und beim zweiten Mal die Statusinformation TA_TGSHPREP in die Statusinformation TA_TGHSUCC umgewandelt, falls im Verlauf der Prozedur die Aufdatierungsinformation mit dem Auftrag zur Abspeicherung auf Platte aufgerufen wurde.

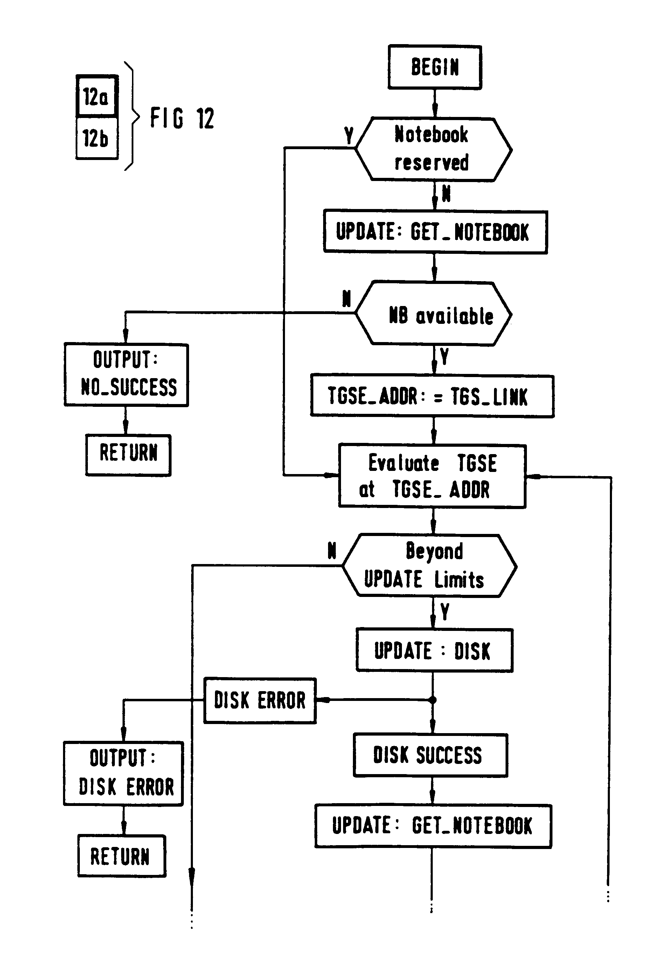

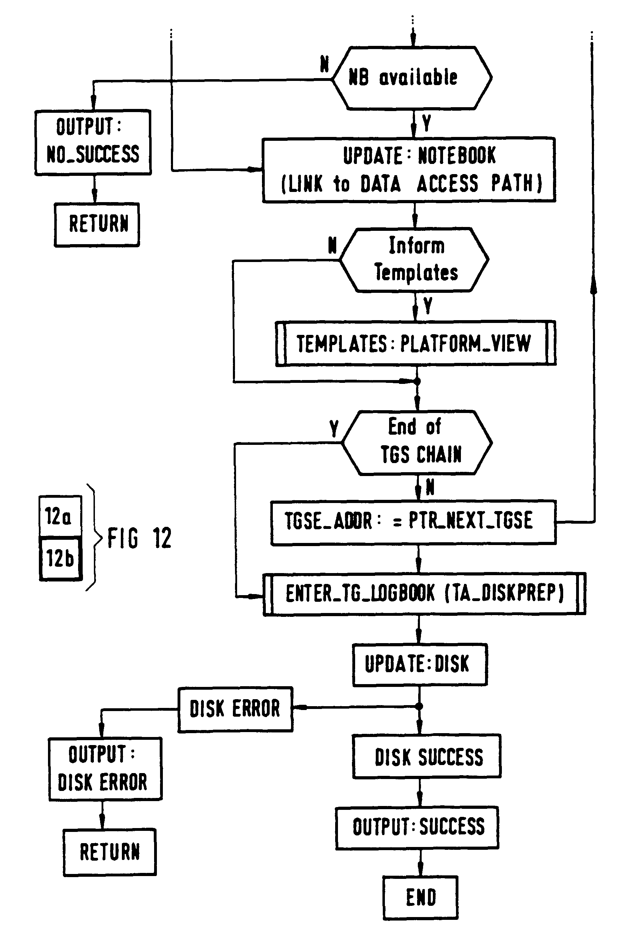

Fig. 12 zeigt das Flußdiagramm einer Prozedur DO_TGSE_ENTRY. Diese Prozedur durchläuft die Weichenstruktur-Kette und überträgt Bindungsinformationen, die eine Weichenstruktur in den Datenzugriffspfad einbinden, an die Aufdatierungsinstanz mit dem Auftrag zur Abspeicherung im Notizbuch. Falls nötig, veranlaßt sie dabei ebenfalls eine Abspeicherung auf der Platte mit dem Aufruf UPDATE: DISK. Die Prozedur hat keinen Eingangsparameter und als Ausgangsparameter dieselben Parameter wie die vorhergehende Prozedur. Die Prozedur wandelt darüber hinaus mögliche Status-Informationen TA_TGSHPREP bzw. TA₋ TGSHSUCC in die Status-Information TA_DISKPREP um.

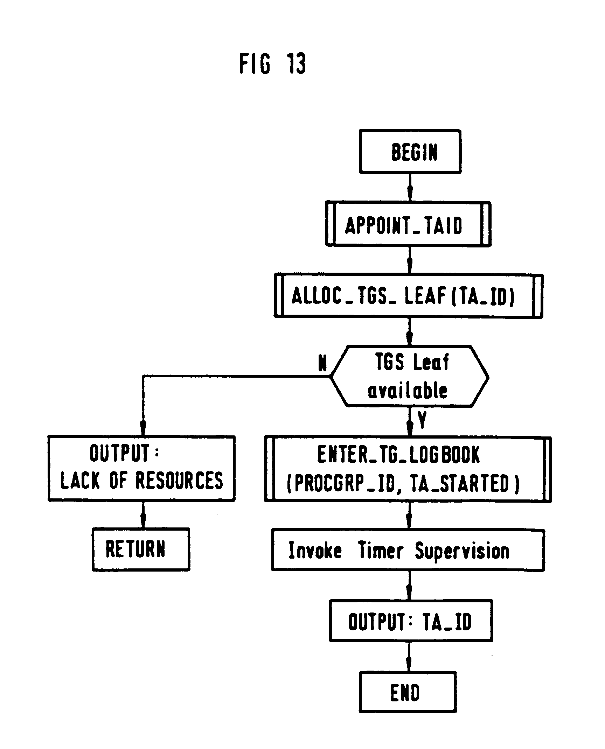

Damit sind die Schnittstellen-Prozeduren des Zugriffs-Steuerungssystems zu den Modulinstanzen erläutert. Im folgenden werden die Schnittstellenprozeduren des Zugriffs-Steuerungssystems zum Anwender anhand der Fig. 13 bis 15 näher erläutert.

Fig. 13 zeigt das Flußdiagramm einer Prozedur START_TA. Diese Prozedur eröffnet eine Transaktion, wobei sie dem ZugriffsSteuerungssystem als Eingangsparameter die Prozeßgruppenkennung übergibt. Und als Ausgangsparameter die in Fig. 13 angegebenen Parameter TA_ID und/oder "LACK OFF RESOURCES" erhält. Die Status-Information wird im Verlaufe dieser Prozedur von "NO_TRANS".

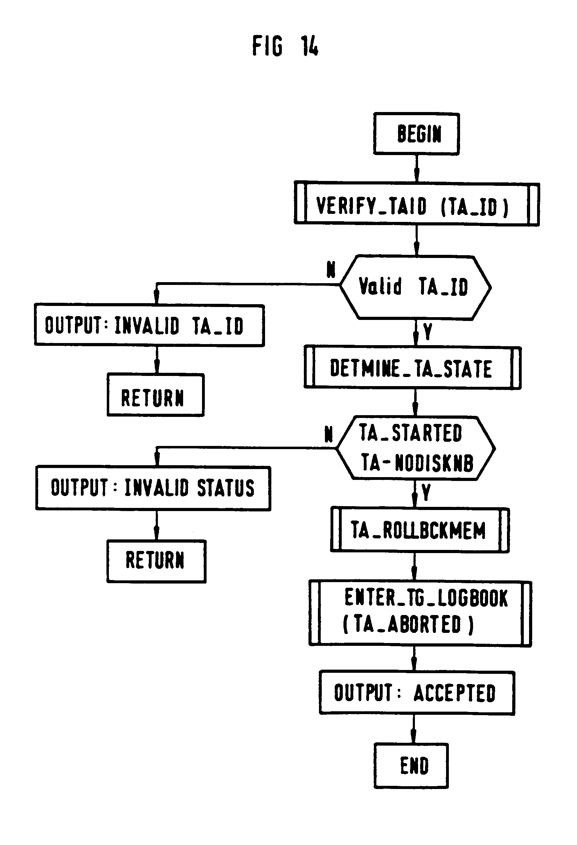

Fig. 14 zeigt das Flußdiagramm einer Prozedur ABORT_TA. Diese Prozedur ermöglicht es dem Anwender, eine von ihm aktivierte Transaktion wieder abzubrechen. Als Eingangsparameter übergibt der Anwender dem Zugriffssteuerungssystem dabei die zu der Transaktion zugehörige Transaktionskennung, woraufhin die zugehörige Transaktion durch die Prozedur rückgängig gemacht wird. Die Ausgangsparameter der Prozedur sind wiederum aus Fig. 14 entnehmbar. Die zu Beginn der Prozedur vorliegenden möglichen Statusinformationen "TA_STARTED" oder "TA_NODISKNB" werden durch die Prozedur in die Statusinformation "TA_ ABORTED" umgewandelt.

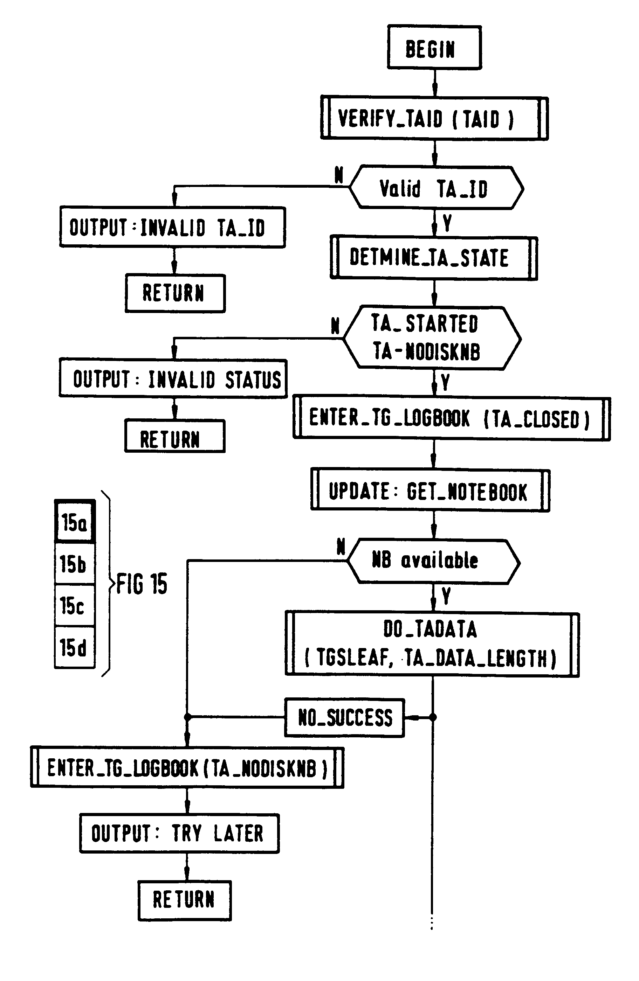

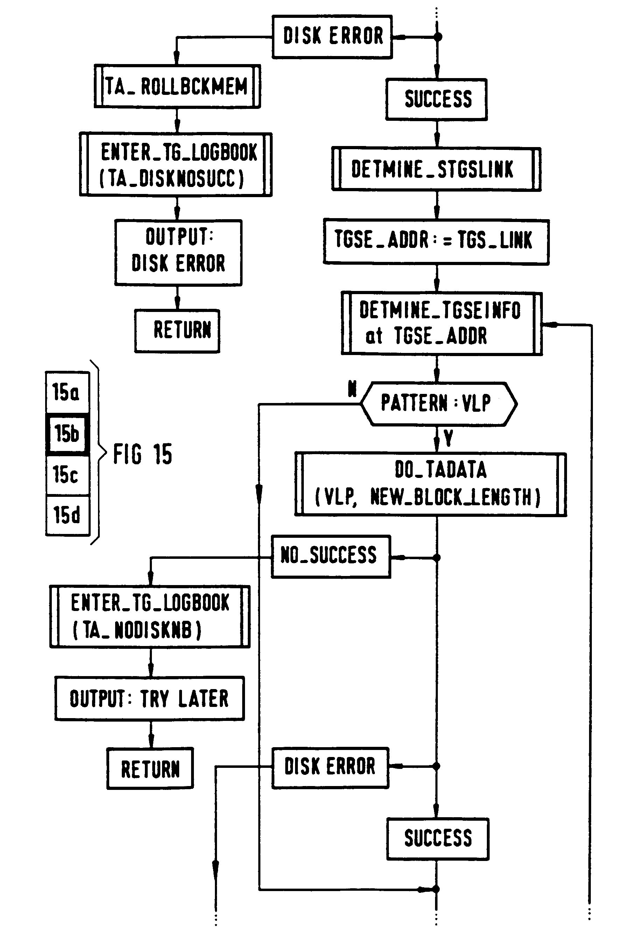

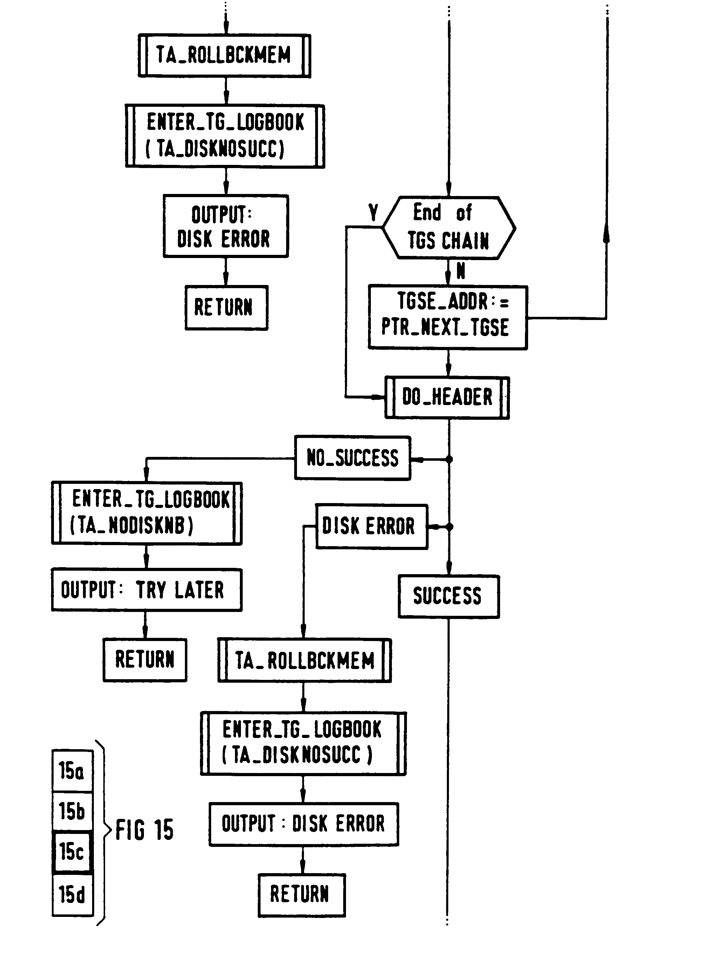

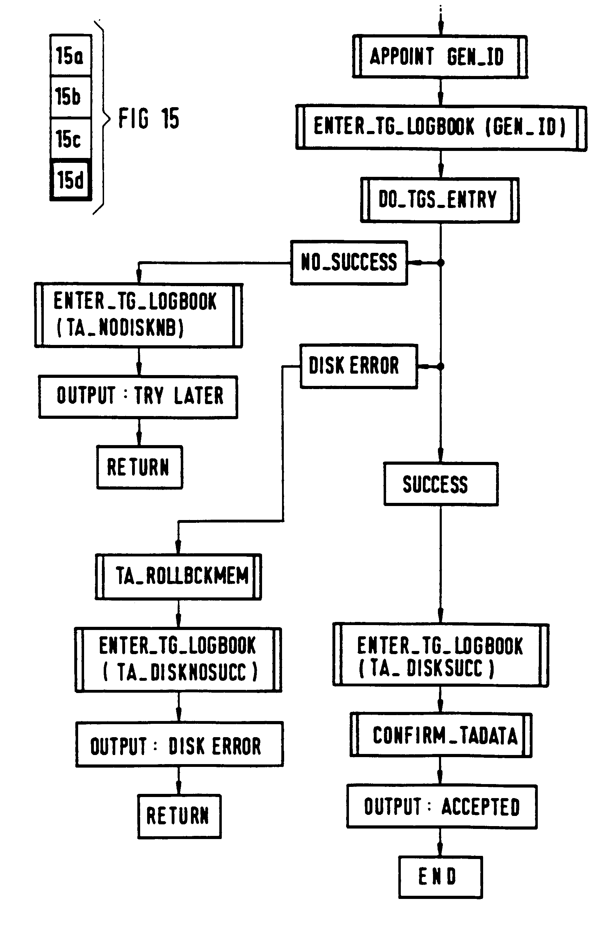

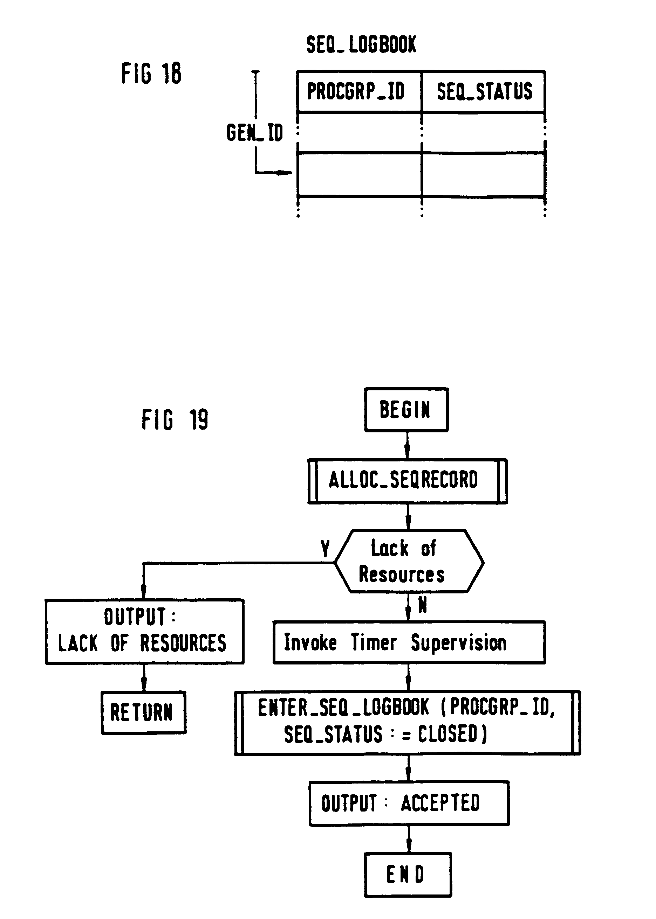

Fig. 15 zeigt das Flußdiagramm einer Prozedur DO_TA. Diese Prozedur beendet die Vorbereitungsphase und eröffnet die Aktivierungsphase einer Transaktion. Der Eingangsparameter dieser Prozedur ist die Transaktionskennung TA_ID, während die Ausgangsparameter dieser Prozedur wiederum aus Fig. 15 entnehmbar sind. Der Status einer Transaktion wird durch diese Prozedur zweimal geändert. Das erste Mal wird die vorliegende Statusinformation "TA_STARTED" in die Status-Information "TA_ CLOSED" umgewandelt. Das zweite Mal wird die vorliegende Status-Information "TA_CLOSED" entweder in die Status-Information "TA_DISKSUCC", oder "TA_DISKNOSUCC" oder "TA_NODISKNB" umgewandelt.

Im folgenden wird das Generationen-Management-System näher erläutert.

Das Generationen-Management-System steuert, wie bereits erwähnt, den leseorientierten Zugriff auf die Datenobjekte des Datenverwaltungssystems. Der leseorientierte Zugriff umfaßt dabei eine Sequenz von logisch untereinander verbundenen Leseanforderungen. Innerhalb einer solchen Sequenz ist sichergestellt, daß auf einen konsistenten Satz von Datenobjekten, d.h. einen Satz von Datenobjekten, der bezüglich eines bestimmten Zeitpunkts gültig ist, zugegriffen wird, und zwar sogar dann, wenn eine Transaktion parallel dazu eine oder mehrere der zugegriffenen Datenobjekte aufdatiert. Um diese Gleichzeitigkeit zu gewährleisten, wird das neue und alte Abbild jedes Datenobjekts in paralleler Weise sowohl im Arbeitsspeicher wie auch auf der Platte gespeichert. Die Generationenkennung GEN_ID, die während der Aktivierungsphase einer Transaktion zugeordnet wird, wird vom Generationen-Management-System in der Generationen-Phase einer Transaktion benützt, um die von der Transaktion erzeugte neue Datengeneration in eindeutiger Weise zu identifizieren.

Wenn für ein bestimmtes Datenobjekt mehr als eine Aufdatierung durchgeführt worden ist, und dabei mehr als eine alte Datengeneration im Speicher behalten wurde, dann beginnt ein sogenannter Generationenbaum zu wachsen.

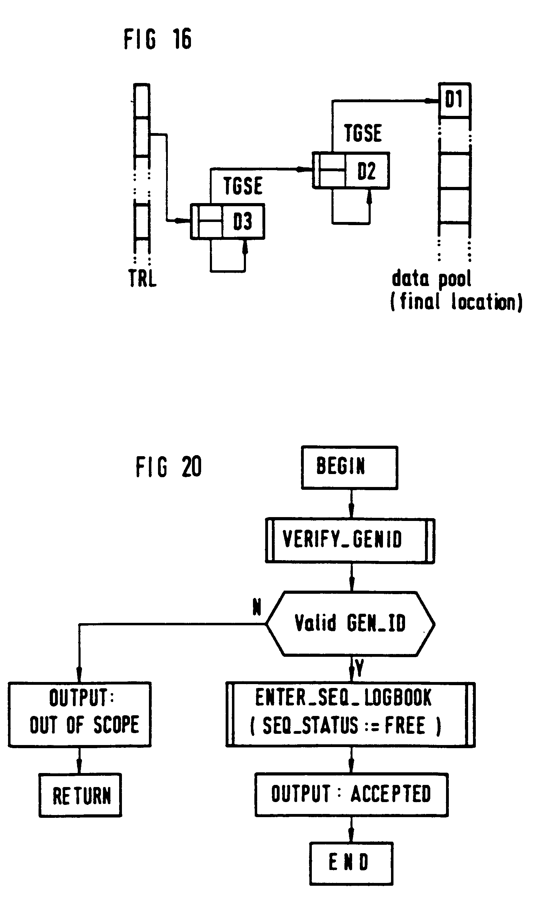

Fig. 16 zeigt einen beispielhaften Generationenbaum für ein bestimmtes Datenobjekt. Der Generationenbaum umfaßt drei Generationen D1, D2 und D3. Die jüngste Generation D3 ist in einer Weichenstruktur enthalten, während die älteste Generation D1 an ihrer endgültigen Stelle im Arbeitsspeicher vorliegt. Der Datenzugriffspfad zum Generationenbaum ist über eine Übersetzerstruktur in Form einer Liste realisiert, die im folgenden als Übersetzerliste TRL bezeichnet wird. Die Recordfelder der Übersetzerstruktur werden vom Zugriffs-Steuerungs-System über einen logischen Index angesteuert und erhalten einen physikalischen Zeiger auf eine Weichenstruktur bzw. falls kein Generationenbaum existiert auf das Datenobjekt im Arbeitsspeicher zurück. Die Recordfelder der Übersetzerstruktur werden im weiteren entsprechend ihrer Funktion als Datenverknüpfungsfelder bezeichnet.

Zum Abbau des Generationenbaums umfaßt das Generationen-Management-System TMS (siehe Fig. 4) ein Transaktions-Post-Processing-System, das alle im Rahmen einer Transaktion im semipermanenten Weichen-Pool TGS_P gespeicherten Daten (Input-Daten) aus diesem auf ihre endgültigen Speicherstellen im Arbeitsspeicher und auf der Platte überträgt. Der Start des Transaktions-Post-Processing-Systems markiert deshalb für die zu diese Daten gehörige Transaktion den Beginn der Generationenphase. Durch das Transaktions-Post-Processing-System werden aber gleichzeitig die unter diesen neu eingebrachten Daten liegenden Daten der ältesten Datengeneration endgültig zerstört. Der Start des Transaktions-Post-Processing-System markiert deshalb für die zu diesen Daten gehörige Transaktion das Ende der Generationenphase.

Das Transaktions-Post-Processing-System ist technisch als eine interne Transaktion des Zugriffs-Steuerungs-Systems realisiert und deshalb gegenüber anderen Transaktionen synchronisiert und koordiniert.

Das Transaktions-Post-Processing-System wird aus zwei unterschiedlichen Gründen gestartet und hat deshalb zwei unterschiedliche Prozessprioritäten. Wenn das Transaktions-Post-Processing-System gestartet wird, um einen Mangel an Resourcen im TGS-Pool zu beheben, hat es eine höhere Prozesspriorität als eine Verwaltungsprozess. Wenn das Transaktions-Post-Processing-System gestartet wird, um die durch eine Transaktion neu eingebrachten Daten auf ihre endgültigen Speicherplätze zu transferieren, hat es diesselbe Prozesspriorität wie ein Verwaltungsprozess.

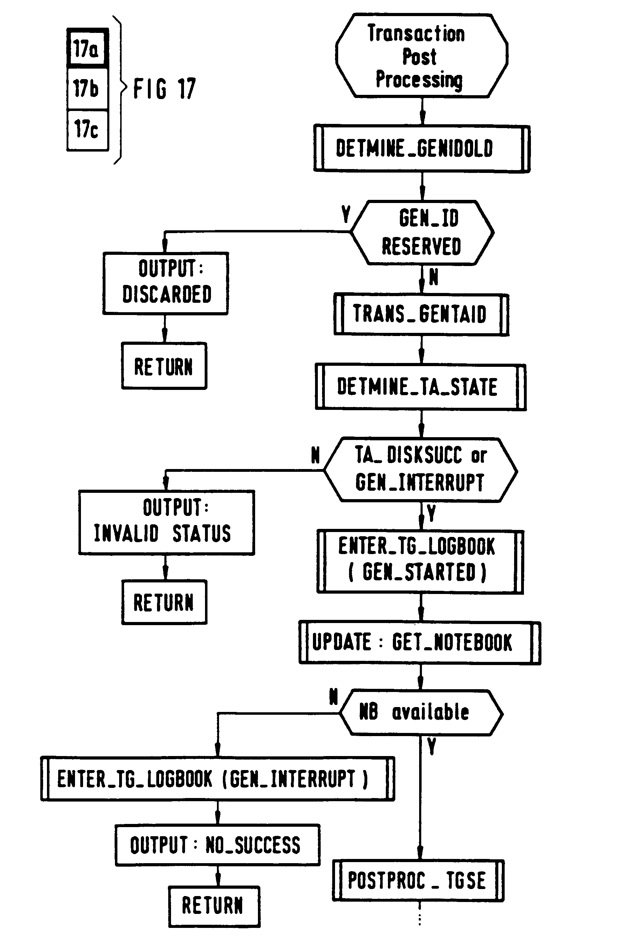

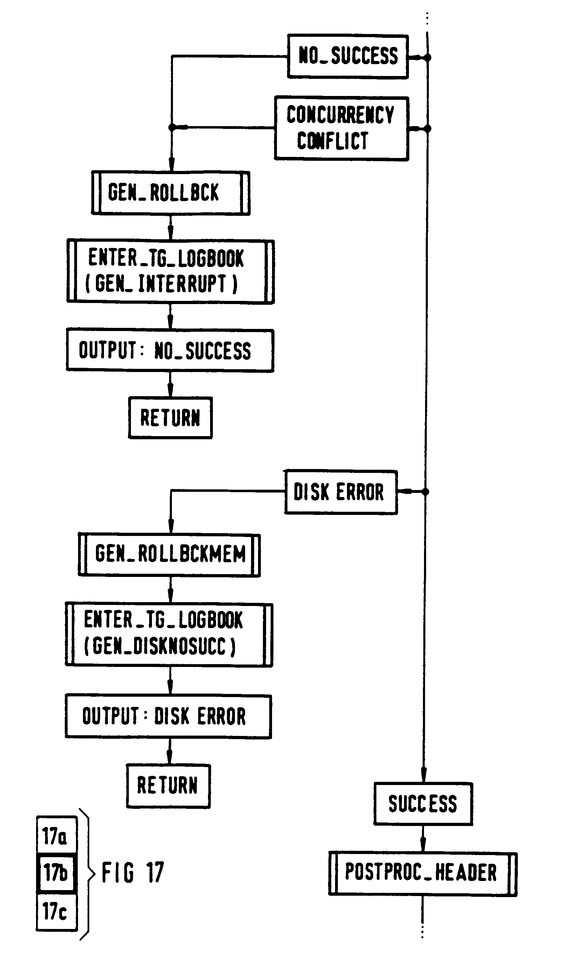

Fig. 17 zeigt das Flußdiagramm des Transaktions-Post-Processing-System, wobei darin auftretende Bezeichnungen weiter unten näher erläutert werden.

Im folgenden werden diejenigen Zugriffs-Datenstrukturen des Resource-Management-Systems RMS näher erläutert, die ausschließlich dazu dienen, die Aufgaben des Generationen-Management-Systems zu unterstützen.

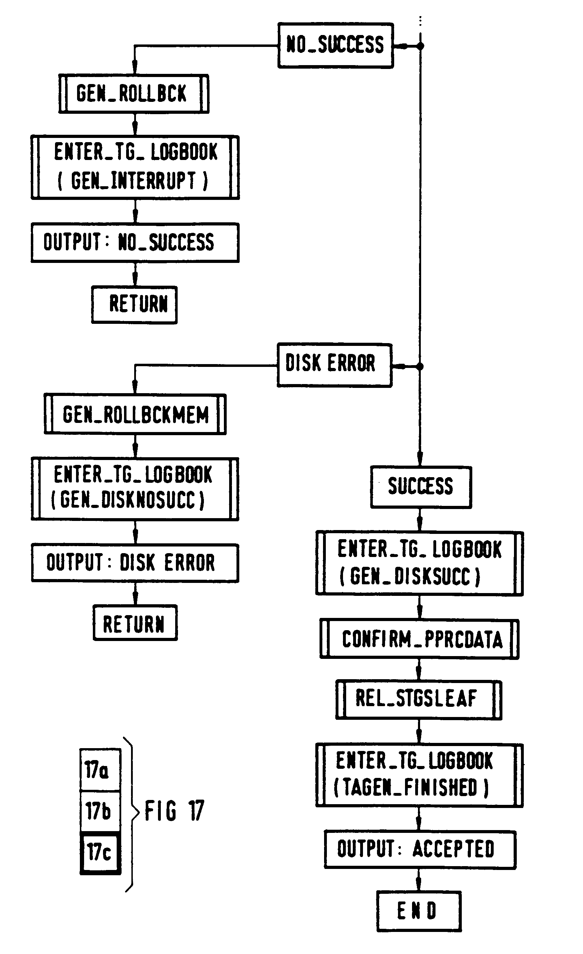

Fig. 18 zeigt die im Zusammenhang mit dem Generationen-Management-System eingeführte Zugriffs-Datenstruktur, das sog. Lese-Logbuch SEQ_LOGBOOK, in dem aktive Lesesequenzen aufgezeichnet werden. Mit Hilfe des Lese-Logbuchs wird sichergestellt, daß ein Datenobjekt, welches von einer aktiven Lesesequenz erreicht wird, vom physikalischen Auslöschen durch das Transaktions-Post-Processing-System ausgeschlossen wird. Das Leselogbuch nimmt außerdem an der Zeitüberwachung von Lesesequenzen teil, da zu lange laufende Lesesequenzen einen negativen Systemeinfluß darstellen. Diese Teilnahme besteht darin, daß die Zeitüberwachung die Einträge im Lese-Logbuch zyklisch abscannt. Wenn sie dabei eine Lesesequenz entdeckt, die eine bestimmte Zeitgrenze überschritten hat, wird diese Lesesequenz verworfen.

Das Leselogbuch beinhaltet ein Datenfeld PROCGRP_ID, das Informationen über die Prozeßgruppe, die die Lesesequenz aufgerufen hat, beinhaltet. Dieses Feld dient, ebenso wie das entsprechende Feld im Transaktionslogbuch zur Unterstützung des Recovery-Post-Processings.

Das Leselogbuchs umfaßt des weiteren ein Datenfeld SEQ_ STATUS, das dem Transaktions-Post-Processing-System eine laufende aktive Lesesequenz anzeigt und dadurch ausschließt, daß eine zu der Generationenkennung zugehöriges Datenobjekt physikalisch gelöscht wird.

Im folgenden werden diejenigen Resourcenprimitiven des Resourcen-Management-Systems näher erläutert, die ausschließlich vom Generationen-Management-System benutzt werden und ebenfalls wie die Resourcenprimitiven des Transaktions-Management-Systems eine Shell um die Zugriffs-Daten-Strukturen des Resourcen-Management-Systems bilden.

Eine Prozedur VERIFY_GENID verifiziert die Generationskennung GEN_ID und übermittelt sie dem Generationen-Management-System, das sie in die Bereichstabelle SKOPE_TABLE abspeichert.

Eine Prozedur ALLOC_SEQREC ordnet einer Lesesequenz zu Beginn ein der Generationenkennung entsprechendes Record im Leselogbuch zu.

Eine Prozedur ENTER_SEQLOG überträgt eine Status-Information der Lesesequenz in das Leselogbuch.

Eine Prozedur DETMINE_GENIDOLD wertet die Bereichstabelle aus und bestimmt die älteste Generationenkennung GEN_ID_OLD.

Eine Prozedur TRANS_GENTAID ermittelt anhand der Bereichstabelle diejenige Transaktionskennung, die zu der dieser Prozedur übergebenen Generationenkennung korrespondiert.

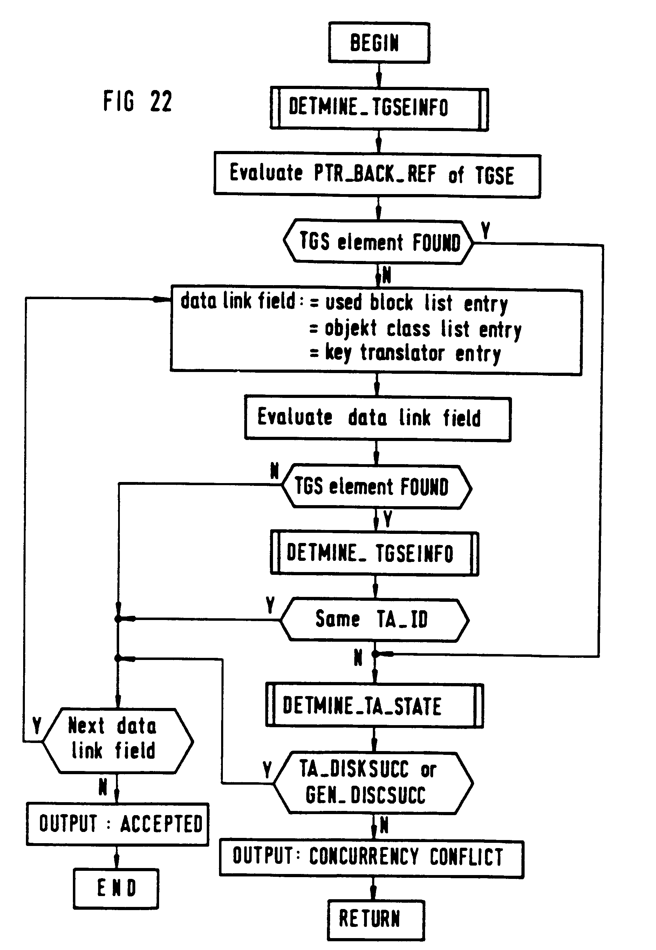

Eine Prozedur POSTPROC_TGSE des Transaktions-Post-Processing-Systems TAPP, durchschreitet die Weichenstruktur-Kette einer Transaktion und führt dabei folgende Aktivitäten durch:
- Sie führt im Falle eines wenig priorisierten Transaktions-Post-Processings einen Kollisionscheck durch, indem sie eine Prozedur GEN_CONCTRL des Kollisions-Management-Systems aufruft, die später anhand Fig. 22 näher erläutert wird,
- Sie kopiert den Inhalt einer Weichenstruktur an die endgültige Speicherstelle im Arbeitsspeicher, löst die Weichenstruktur im Falle eines verknüpften Speicherblocks des Datenpools aus dem Datenzugriffspfad und informiert den Datenpool darüber,
- Sie überträgt Transaktionsdaten in den Zwischenspeicher der Transaktion und veranlaßt, falls nötig, einen zwischenzeitlichen Aufdatierungsvorgang,
- Sie datiert den Header des Transaktionsblattes auf und trägt die Weichenstruktur-Nummer NO_TGSE in das Transaktionslogbuch ein.

Eine Prozedur POSTPROC_HEADER des Transaktions-Post-Processing-Systems, die folgende Aktivitäten umfaßt:
- Sie ändert die transiente Status-Information im Header des Weichenpools auf den Wert "TA_CLOSED",
- Sie gibt das Zugangs feld (Verschlußfeld) zum Header des Weichenpools und zum Transaktionsblatt der Transaktion frei,
- Sie wechselt die Status-Information im Transaktionslogbuch auf den Wert "GEN_DISKPREP" und betritt den entsprechenden Record im Header des Weichenpools,
- Sie transferiert die Daten im sprechenden Record des Headers des Weichenpools sowie die Daten im Transaktionslogbuch in einen Zwischenspeicher NOTEBOOK(NB),
- Sie veranlaßt und steuert den Aufdatierungsvorgang auf der Platte DISK.

Eine Prozedur GEN_ROLLBCK ermöglicht eine Rückgängigmachung (Roll backward) von Transaktionen in der Generationenphase und führt dazu folgende Aktionen durch:
- Sie durchschreitet die semipermanente Weichenstruktur-Kette,
- Sie wertet die Verknüpfungsdaten zwischen der Weichenstruktur und dem Datenzugriffspfad aus, verknüpft, falls nötig, erneut die Weichenstruktur mit dem Datenzugriffspfad, überträgt die Verknüpfungsdaten in den Zwischenspeicher, und veranlaßt, falls notwendig einen zwischenzeitlichen Aufdatierungsvorgang auf die Platte,
- Sie ruft die Aufdatierungsinstanz UPDATE zur Veranlassung der Aufdatierung auf die Platte auf,
- Sie benützt die Prozedur CONFIRM_TADATA, die ebenfalls vom Transaktions-Management-System benützt wird und bereits früher erläutert wurde.

Im folgenden werden die Schnittstellenprozeduren zwischen Anwender und Generationen-Management-System anhand der Fig. 19 und 20 näher erläutert.

Fig. 19 zeigt das Flußdiagramm einer Prozedur BE-GIN_GETSEQUENCE, durch deren Aufruf vom Anwender eine Lesesequenz gestartet wird. Diese Prozedur ordnet der Lesesequenz ein der momentan aktuellen Generationenkennung entsprechendes Record-Feld im Leselogbuch zu und ändert den Parameter SEQ_STATUS auf den Wert "closed". Dadurch wird sichergestellt, daß kein Datenobjekt, das zu der aktuellen Generationenkennung gehört, durch das Transaction-Post-Processing gelöscht werden kann. Außerdem wird durch diese Prozedur eine Zeitüberwachung aufgerufen, um einen negativen Systemeinfluß durch eine langlaufende Lesesequenz zu vermeiden. Als Eingangsparameter dieser Prozedur dient der Parameter PROCGRP_ID. Ausgangsparameter dieser Prozedur sind die Generationenkennung GEN_ID, sowie ein Meldungsparameter, der die Meldungen "lack of ressources" und "accepted" umfaßt.

Fig. 20 zeigt das Flußdiagramm der Prozedur END_GETSEQUENCE, die eine Lesesequenz beendet und alle zu der Generationenkennung der Lesesequenz zugehörigen Datenobjekte für das Transaktions-Post-Processing freigibt, indem sie den Parameter SEQ_STATUS auf den Wert "FREE" ändert. Eingangsparameter dieser Prozedur ist der Parameter GEN_ID. Ausgangsparameter dieser Prozedur ist ein Meldungsparamter mit den Meldungen "Out of scope" oder "accepted".

Im folgenden wird das Kollisions-Management-System näher erläutert, das Zugriffskonflikte gleichzeitig stattfindender Transaktionen behandelt, die sich nicht gänzlich durch planerische Maßnahmen von vornherein vermeiden lassen. Das Kollisions-Management-System umfaßt im wesentlichen zwei Prozeduren, nämlich eine Prozedur TA_CONCTRL, die Zugriffskollisionen in der vom Transaktions-Management-System kontrollierten Phase einer Transaktion zu behandeln, und eine Prozedur GEN_CONCTRL, die Zugriffskollisionen in der vom Generationen-Management-System kontrollierten Phase einer Transaktion zu behandeln.

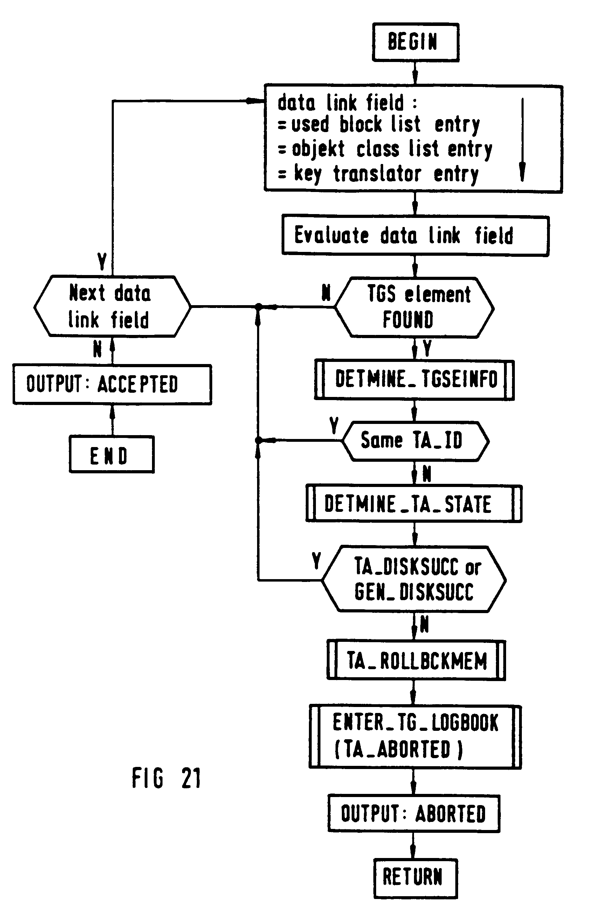

Fig. 21 zeigt ein Flußdiagramm der Prozedur TA_CONCRTL, die in die Prozedur ALLOC_TGSE eingebettet ist und Zugriffskonflikte in der Vorbereitungsphase einer Transaktion behandelt, wenn zwei Transaktionen ihre Weichenstruktur mit demselben Datenverknüpfungsfeld des Datenzugriffspfades zu einem Datenobjekt verknüpfen wollen. Um diese Konfliktsituation zu lösen, beinhaltet ein Datenverknüpfungsfeld (data link field) außer dem Zeigerfeld ein Zugangs feld, in dem eine Transaktion seine Transaktionskennung hinterlegt, falls das Zugangsfeld noch nicht verschlossen ist, d.h. falls keine andere Transaktionskennung in dem Zugangsfeld bereits hinterlegt ist. Die Verknüpfung der Weichenstruktur mit dem Datenzugriffspfad wird daraufhin durch die Hinterlegung des physikalischen Zeigers auf die Weichenstruktur bewirkt. Eine Weichenstruktur, die im Rahmen einer Transaktion mit einem bestimmten Datenverknüpfungsfeld verknüpft werden soll, gerät in einen Kollisionskonflikt, falls eine andere aktive Transaktion das Zugangsfeld dieses Datenverknüpfungsfeldes bereits besetzt hat. Die Koordination dieses Konfliktes wird wie folgt geregelt:
- eine Transaktion in der Vorbereitungsphase, die ein Zugangsfeld zu einem Datenobjekt zuerst reserviert hat, darauf fortgeführt werden. Die andere Transaktion wird verworfen.
- Eine Transaktion, die die Aktivierungsphase bereits erreicht hat, wird wegen Zugriffskonflikten nicht mehr verworfen.

Fig. 22 zeigt ein Flußdiagramm der Prozedur GEN_CONCTRL, die in die Prozedur POSTPROCR_TGSE des Transaktions-Post-Processing-Systems eingebettet ist und Konflikte zwischen Transaktions-Post-Processing-System und einer Lesesequenz in der Generationenphase einer Transaktion behandelt. Genauer gesagt verhindert die Prozedur GEN_CONCTRL im Falle eines gering priorisierten Transaktions-Post-Processings, daß eine Datengeneration gelöscht wird, wenn eine Lesesequenz auf diese Datengeneration zugreifen will. Im Gegensatz dazu wird bei einem hochpriorisierten Transaktions-Post-Processings, das im Falle eines Mangels an Ressourcen für das Zugriffssteuerungssystem durchgeführt wird, die Lesesequenz verworfen und die Datengeneration gelöscht.

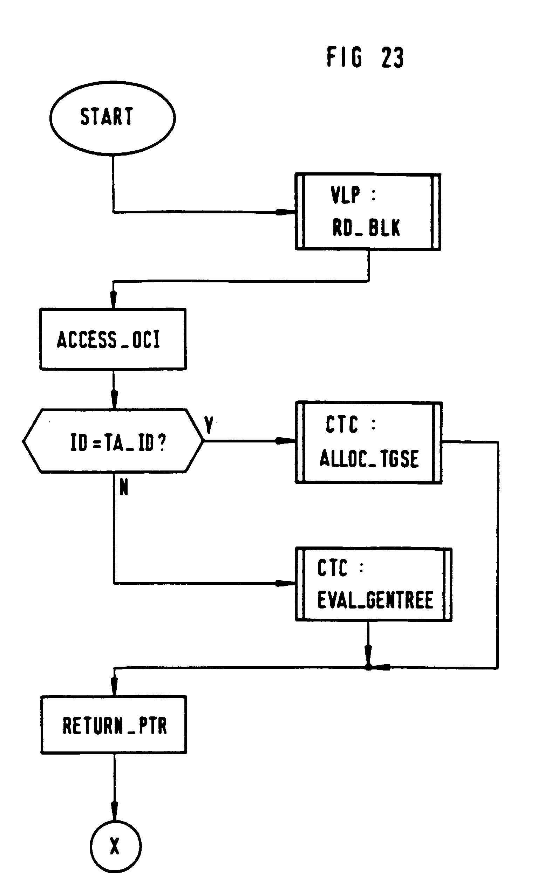

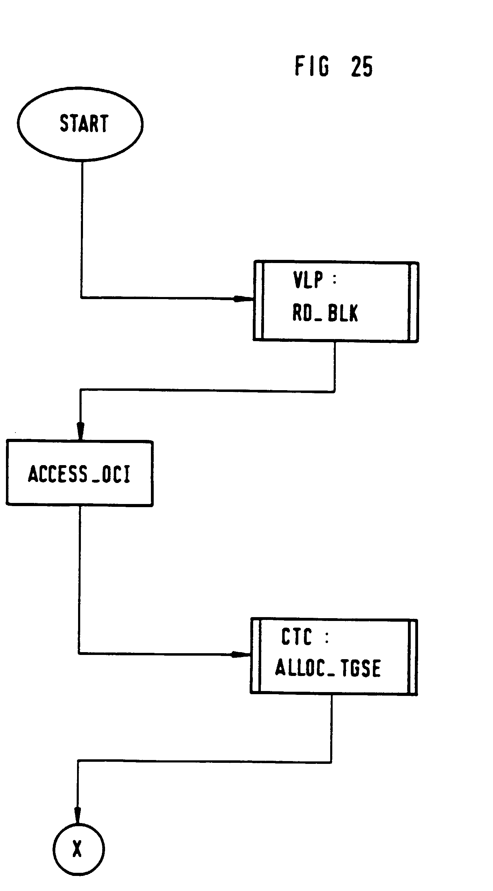

Im folgenden werden die in einer Transaktion oder einer Lesesequenz zusammengefaßten Einzelaktionen bzw. genauer gesagt die Prozeduren zur Durchführung dieser Einzelaktionen anhand der Fig. 23, 24 und 25 näher erläutert.

Fig. 23 zeigt eine Prozedur GET, die in einem Anwendermodul enthalten ist und eine einzelne Leseaktion durchführt, wobei sie sowohl im Rahmen einer Transaktion, als auch im Rahmen einer Lesesequenz aufgerufen werden kann. Eingangsparameter der Prozedur GET sind eine Kennung der Leseaktion und ein logischer Key, der durch den Datenzugriffspfad zum Datenobjekt führt. Bei der Kennung der Transaktion handelt es sich um eine Transaktionskennung TA_ID, wenn die Prozedur GET innerhalb einer Transaktion verwendet wird. Im anderen Fall, nämlich wenn die Prozedur GET innerhalb einer Lesesequenz verwendet wird, handelt es sich bei der Kennung um eine Generationenkennung GEN_ID. Ausgangsparameter der Prozedur GET sind das Datenobjekt sowie ein Meldungsparameter zur Rückgabe von Kontrollmeldungen.

Zunächst wird anhand des logischen Keys über Listen der Datenzugriffspfad durchlaufen.

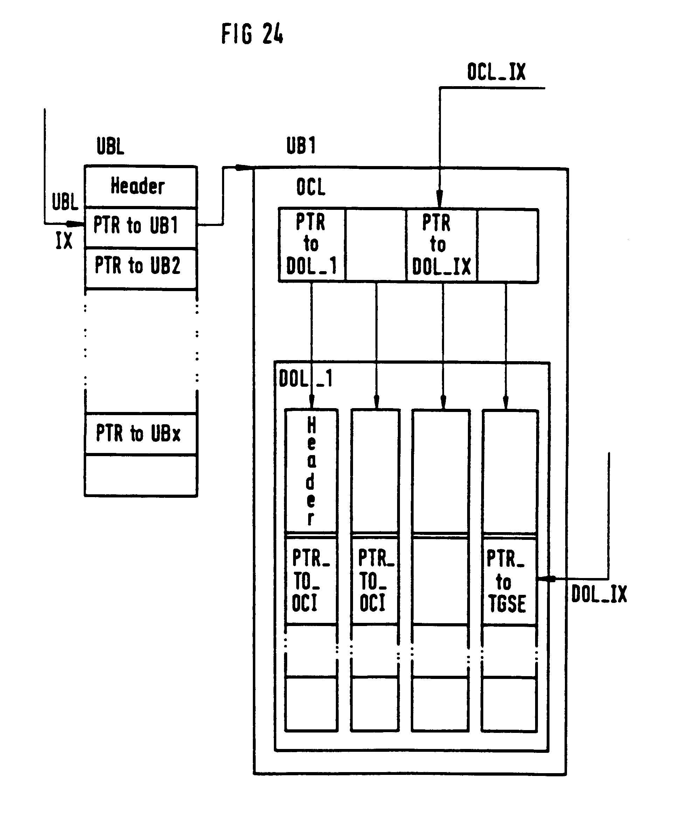

Fig. 24 zeigt die beispielhafte Struktur eines Datenzugriffspfads, der mehrere Listen umfaßt und im anwenderunabhängigen Datenmodul VLP abgespeichert ist. Der Datenzugriffspfad umfaßt eine Datenblockliste UBL, deren Listenelemente Zeiger auf Datenblöcke UB darstellen, sowie innerhalb eines Datenblocks UB eine Objektklassenliste OCL und Datenobjektlisten DOL . Der logische Key umfaßt Indexe der genannten Listen, nämlich die Indexe UBL_IX, OCL_IX und DOL_IX, anhand derer schließlich der Zeiger auf ein Datenobjekt OCI bzw. eine Weichenstruktur TGSE ermittelt werden kann.

Zunächst durchläuft die Prozedur GET den Datenzugriffspfad, indem sie die Prozedur RD_BLK aufruft, die im anwenderunabhängigen zentralen Datenpool VLP implementiert ist. Diese Prozedur liefert als Rückgabewert den physikalischen Zeiger auf eine Datenobjektsliste DOL. Im Falle einer Transaktion wird dieser Zeiger erst in der auf die Vorbereitungsphase der Transaktion folgenden Aktivierungsphase benutzt, um den eigentlichen Zugriff auszuführen.

Als nächstes wird die Prozedur ACCESS_OCI mit den Parametern "Zeiger auf die Datenobjektliste DOL" und "DOL_IX" aufgerufen. Diese Prozedur untersucht u.a. den Header der DOL und ermittelt, ob es sich bei dem übergebenen Parameter "DOL_IX" um einen gültigen Index handelt.

Ist der Index DOL_IX gültig, dann wird anschließend das dem Index DOL_IX entsprechende Listenfeld der Liste DOL analysiert. Dabei wird untersucht, ob es sich bei der im Zugangsfeld (Verschlußfeld) des Listenfeldes abgespeicherten Kennung ID um eine Transaktionskennung oder eine Generationenkennung handelt. Dies ist in Fig. 23 durch einen Verzweigungsblock dargestellt.

Falls es sich um eine Generationenkennung handelt wird anhand der Prozedur EVAL_GENTREE der sich an den Datenzugriffspfad anschließende Generationenbaum ausgewertet und daraufhin der der Generationenkennung entsprechende physikalische Zeiger auf das Datenobjekt zurückgegeben.

Falls es sich bei der Kennung ID um eine Transaktionskennung handelt, wird die Prozedur ALLOC_TGSE aufgerufen, die eine darauffolgende Schreibaktion durch eine Prozedur SET vorbereitet, und das Datenobjekt gegenüber anderen Transaktionen verschlossen. Dies hat desweiteren zur Folge, daß während der Aktivierungsphase der Transaktion das Transaktions-Post-Processing keine Aktionen bezüglich dieses Datenobjekts durchführen kann.

Ein anwenderspezifisches Datenmodule GMI umfaßt desweiteren eine Prozedur SET, die ein Datenobjekt innerhalb einer Transaktion modifiziert. Eingangsparameter dieser Prozedur sind eine Transaktionskennung TA_ID, ein logischer Key zur Führung durch den Datenzugriffspfad und ein Zeiger zu den neu zu übernehmenden Daten sowie eine Längenangabe der neuen Daten. Ausgangsparameter ist ein Parameter für Rückmeldungen.

Die Prozedur SET umfaßt wie die Prozedur GET den Datenzugang, der mit Hilfe der Prozeduren RD_BLK und ACCESS_OCI durchgeführt wird. Danach wird die im CTCC enthaltene Prozedur ALLOC_TGSE aufgerufen, die eine neue Weichenstruktur TGSE anfordert und die neuen Daten bzw. das neue Datenobjekt in die Weichenstruktur kopiert. Falls die Prozedur SET durch die Prozedur GET vorbereitet wurde, entfällt die genannte Zuordnung einer neuen Weichenstruktur.

Die anwenderspezifischen Datenmodule umfassen desweiteren eine Prozedur CREATE, die eine Objektklasse um ein Datenobjekt erweitert und eine Prozedur DELETE, die eine Objektklasse um ein Datenobjekt verringert. Die beiden genannten Prozeduren sind für die Beschreibung der Erfindung ohne Bedeutung und werden deshalb nicht näher erläutert.

## Patentansprüche

1. Datenverwaltungssystem eines Realzeitsystems, mit
a) einem Transaktions-Management-System (TMS), das Transaktionen zwischen Anwendern und Datenverwaltungssystem steuert, wobei es sich bei einer Transaktion um eine Sequenz von Zugriffen auf logisch voneinander abhängige Daten handelt
b) einer Zugriffs-Datenstruktur (TGSE), die vom Transaktions-Management-System im Rahmen einer Transaktion in den Zugriffspfad eines zu modifizierenden Datenobjekts eingefügt wird und die eine Weiche mit einem ersten Ausgang zum alten Abbild des Datenobjekts und einem zweiten Ausgang zum neuen Abbild des Datenobjekts umfaßt,
c) einem Generationen-Management-System (GMS), das die im Rahmen einer Transaktion erzeugte neue Datengeneration nach der Beendigung der Transaktion anhand der durch die Transaktion eingefügten Zugriffs-Datenstrukturen(TGSE) verwaltet.

2. Datenverwaltungssystem eines Realzeitsystems nach Anspruch 1,
**gekennzeichnet durch**
eine Verwaltungs-Datenstruktur (TGL), mithilfe derer das Transaktions-Management-System die im Rahmen einer Transaktion eingefügten Zugriffs-Datenstrukturen (TGSE) durch Verkettung zu einer Datengeneration mit einer bestimmten Generationenkennung (GEN_ID) zusammenfaßt, wobei die Generationenkennung dem Generationen-Management-System anschließend zur Verwaltung der solchermaßen zusammengefaßten Datengeneration übergeben wird.

3. Datenverwaltungssystem eines Realzeitsystems nach Anspruch 1 oder 2,
**dadurch gekennzeichnet,**
daß das Generationen-Management-System ein Lese-Management-System (LMS) umfaßt, das logisch zusammenhängende Lesezugriffe, sogenannte Lesesequenzen steuert, wobei das Lese-Management-System die an das Generationen-Management-System übergebene Generationenkennung (GEN_ID) benützt, um einen konsistenten Lesesequenzzugriff durchzuführen.

4. Datenverwaltungssystem eines Realzeitsystems nach einem der Ansprüche 1 bis 3,
**dadurch gekennzeichnet,**
daß die Zugriffs-Datenstruktur (TGSE) ein Verschlußfeld (TA_ID) umfaßt, mithilfe dessen eine Transaktion den Zugang zu einem dahinterliegenden Datenobjekt durch Hinterlegung einer Transaktionskennung (TA_ID) ausschließlich für sich reservieren kann.

5. Datenverwaltungssystem eines Realzeitsystems nach einem der Ansprüche 1 bis 4,
**dadurch gekennzeichnet,**
daß die Zugriffs-Datenstruktur (TGSE) den Datenobjekten dynamisch zugeordnet wird.

6. Datenverwaltungssystem eines Realzeitsystems nach Anspruch 5,
**dadurch gekennzeichnet,**
daß das Datenlayout einer Zugriffs-Datenstruktur (TGSE) derart ausgebildet ist, daß der erste Ausgang der Weiche einer Zugriffs-Datenstruktur (TGSE) auch auf eine ältere Zugriffs-Datenstruktur (TGSE) zeigen kann.

## Claims

1. Data management system of a real-time system, having
a) a transaction management system (TMS), which controls transactions between users and the data management system, a transaction being a sequence of accesses to logically interdependent data,
b) an access data structure (TGSE), which in the course of a transaction is inserted by the transaction management system into the access path of a data object to be modified and which comprises a separating filter with a first output to the old image of the data object and a second output to the new image of the data object,
c) a generations management system (GMS), which manages the new data generation produced in the course of a transaction after the ending of the transaction on the basis of the access data structures (TGSE) inserted by the transaction.

2. Data management system of a real-time system according to Claim 1, characterized by a management data structure (TGL), with the aid of which the transaction management system combines the access data structures (TGSE) inserted in the course of a transaction by linking them together to form a data generation with a specific generation identifier (GEN_ID), the generation identifier subsequently being transferred to the generations management system for management of the data generation combined in this way.

3. Data management system of a real-time system according to Claim 1 or 2, characterized in that the generations management system comprises a reading management system (LMS), which controls logically associated read accesses, so-called reading sequences, the reading management system using the generation identifier (GEN_ID) transferred to the generations management system in order to carry out a consistent reading sequence access.

4. Data management system of a real-time system according to one of Claims 1 to 3, characterized in that the access data structure (TGSE) comprises a barring field (TA_ID), with the aid of which a transaction can reserve exclusively for itself access to a data object behind it by storing a transaction identifier (TA_ID).

5. Data management system of a real-time system according to one of Claims 1 to 4, characterized in that the access data structure (TGSE) is dynamically assigned to the data objects.

6. Data management system of a real-time system according to Claim 5, characterized in that the data layout of an access data structure (TGSE) is designed in such a way that the first output of the separating filter of an access data structure (TGSE) can also point to an older access data structure (TGSE).

## Revendications

1. Système de gestion de données d'un système exploité en temps réel, comportant
a) un système de gestion de transactions (TMS) qui commande des transactions entre des utilisateurs et le système de gestion de données, une transaction étant une séquence d'accès à des données dépendant logiquement les unes des autres,
b) une structure de données d'accès (TGSE) qui est introduite par le système de gestion de transactions au cours d'une transaction dans le chemin d'accès d'un objet de données à modifier et qui comprend un branchement avec une première sortie vers l'ancienne image de l'objet de données et une deuxième sortie vers la nouvelle image de l'objet de données,
c) un système de gestion de générations (GMS) qui gère après la fin d'une transaction la nouvelle génération de données, produite au cours de la transaction, à l'aide des structures de données d'accès (TGSE) introduites par la transaction.

2. Système de gestion de données d'un système exploité en temps réel selon la revendication 1,
caractérisé par une structure de données de gestion (TGL) à l'aide de laquelle le système de gestion de transactions regroupe les structures de données d'accès (TGSE) introduites au cours d'une transaction au moyen d'un enchaînement à une génération de données ayant un certain identificateur de génération (GEN_ID), l'identificateur de génération étant ensuite transmis au système de gestion de générations en vue de la gestion de la génération de données ainsi regroupée.

3. Système de gestion de données d'un système exploité en temps réel selon la revendication 1 ou 2,
caractérisé par le fait que le système de gestion de générations comprend un système de gestion de lecture (LMS) qui commande des accès en lecture logiquement dépendants, appelés séquences de lecture, le système de gestion de lecture utilisant l'identificateur de génération (GEN_ID), transmis au système de gestion de générations, pour mettre en oeuvre un accès de séquence de lecture consistant.

4. Système de gestion de données d'un système exploité en temps réel selon l'une des revendications 1 à 3,
caractérisé par le fait que la structure de données d'accès (TGSE) comprend un champ de verrouillage (TA_ID) à l'aide duquel une transaction peut se réserver exclusivement l'accès à un objet de données ainsi indiqué en mémorisant un identificateur de transaction (TA_ID).

5. Système de gestion de données d'un système exploité en temps réel selon l'une des revendications 1 à 4,
caractérisé par le fait que la structure de données d'accès (TGSE) est associée de façon dynamique aux objets de données.

6. Système de gestion de données d'un système exploité en temps réel selon la revendication 5,
caractérisé par le fait que l'implantation de données d'une structure de données d'accès (TGSE) est conçue de telle sorte que la première sortie du branchement d'une structure de données d'accès (TGSE) peut aussi pointer sur une structure de données d'accès (TGSE) plus ancienne.
